# EUROPEAN PATENT APPLICATION

(11) **EP 2 335 807 A1**
(43) Date of publication of application: **22.06.2011**
(21) Application number: 09816106.0
(22) Date of filing: 17.09.2009
(51) Int. Cl.: B01D 53/86, B01J 19/08, B01J 23/50, B01J 23/755, B01J 35/08, C25B 9/08, C25B 11/06, H01M 4/86, H01M 8/02

(54) **ELECTROCHEMICAL REACTOR, METHOD FOR MANUFACTURING THE ELECTROCHEMICAL REACTOR, GAS DECOMPOSING ELEMENT, AMMONIA DECOMPOSING ELEMENT, AND POWER GENERATOR**

(30) Priority: 24.09.2008 JP 2008244537; 30.06.2009 JP 2009156037; 04.08.2009 JP 2009181873
(71) Applicant: Sumitomo Electric Industries, Ltd., Chuo-ku Osaka-shi Osaka 540-0041 (JP)
(72) Inventor: MAJIMA, Masatoshi, Osaka-shi Osaka 554-0024 (JP); FUKUNAGA, Atsushi, Osaka-shi Osaka 554-0024 (JP); INAZAWA, Shinji, Osaka-shi Osaka 554-0024 (JP); UEDA, Toshio, Itami-shi Hyogo 664-0016 (JP); NAKATA, Motomi, Osaka-shi Osaka 554-0024 (JP); MORI, Hiroki, Osaka-shi Osaka 554-0024 (JP); YAMAKAWA, Masahiro, Osaka-shi Osaka 554-0024 (JP)
(74) Representative: Setna, Rohan P.
(86) International application number: PCT/JP2009/066279
(87) International publication number: WO 2010/035691

(57) **Abstract**

[Object] To provide an electrochemical reactor that is small in size but high in throughput capacity, does not generate NOx or carbon dioxide, can be operated at a low running cost, is easy to handle during assembling, and has a simple structure and high durability, a method for manufacturing the reactor, a gas decomposing element, an ammonia decomposing element, and a power generator.

[Solution] An electrochemical reactor 10 includes a porous anode 2, a porous cathode 5 that is paired with the anode, and an ion conductive material 1 having an ion conductivity and being interposed between the anode and the cathode. The anode 2 includes surface-oxidized metal particle chains 21.

## Description

### Technical Field

The present invention relates to electrochemical reactors, methods for manufacturing the electrochemical reactors, gas decomposing elements, ammonia decomposing elements, and power generators. In particular, it relates to an electrochemical reactor that can efficiently decompose gas and has a simple structure and high durability, a method for manufacturing the electrochemical reactor, a gas decomposing element, an ammonia decomposing element, and a power generator.

### Background Art

Ammonia is an indispensable compound for agriculture and industry but is harmful to human. Thus, many methods for decomposing ammonia in water or air have been disclosed. For example, a method for decomposing and eliminating ammonia from water having a high ammonia concentration has been proposed in which atomized ammonia water is brought into contact with air flow to separate ammonia into air and the separated ammonia is brought into contact with a hypobromous acid solution or sulfuric acid (PTL 1). Also disclosed is a method including separating ammonia into air through the same process as that described above and burning the separated ammonia in the presence of a catalyst (PTL 2). A method including decomposing ammonia-containing drainage water in the presence of a catalyst into nitrogen and water (PTL 3). Examples of the known catalyst for the ammonia decomposition reaction include porous carbon particles containing transition metal components, manganese compositions, and iron-manganese compositions (PTL 3); chromium compounds, copper compounds, and cobalt compounds (PTL 4); and platinum supported on a three-dimensional network structure composed of alumina (PTL 5). Generation of nitrogen oxides NOx can be suppressed according to the methods for decomposing ammonia involving chemical reactions that use the catalyst described above. Also proposed is a method for more effectively accelerating ammonia pyrolysis at 100°C or lower by using manganese dioxide as the catalyst (PTL 6 and 7).
Meanwhile, in order to achieve low running cost without injection of energy, chemicals, etc., a process for treating exhaust gas from a semiconductor production system has been proposed which involves a hydrogen-oxygen fuel cell-type decomposition method (PTL 8).

### Citation List

### Patent Literature

PTL 1: Japanese Unexamined PatentApplication Publication No. 7-31966
PTL 2: Japanese Unexamined Patent Application Publication No. 7-116650
PTL 3: Japanese Unexamined Patent Application Publication No. 11-347535
PTL 4: Japanese Unexamined Patent Application Publication No. 53-11185
PTL 5: Japanese Unexamined Patent Application Publication No. 54-10269
PTL 6: Japanese Unexamined Patent Application Publication No. 2006-231223
PTL 7: Japanese Unexamined Patent Application Publication No. 2006-175376
PTL 8: Japanese Unexamined Patent Application Publication No. 2003-45472

### Summary of Invention

### Technical Problem

Decomposition of ammonia is possible through a method of using a chemical such as a neutralizer PTL 1), a method of burning ammonium (PTL 2), a method involving pyrolysis reaction using a catalyst (PTL 3 to 7), etc. However, according to these methods, chemicals and external energy (fuel) are needed, regular replacement of the catalyst is required, and the running cost is high. Moreover, a large-scale facility is needed and in some cases it is difficult to additionally install the facility to an already existing facility. In Japan, size-reduction of facilities often yields large practical benefits as long as the efficiency is not impaired and is usually highly appreciated. There is also a problem of CO₂ and NOx emission regarding the method involving burning ammonia.
Regarding the hydrogen-oxygen fuel cell-type decomposition method, a long flow path for exhaust gas is needed on the fuel electrode side if ammonia elimination is pursued down to the ppm order, and this increases the pressure loss. Furthermore, a membrane electrode assembly (MEA) that uses a solid oxide electrolyte film used in the hydrogen-oxygen fuel cell decomposition method is fragile in terms of strength and is thus very difficult to handle during assembling. In particular, when a multilayer structure is to be assembled, damage easily occurs despite extreme care taken, and thus the man-hour needed for assembly tends to increase and the yield tends to decrease.
Apart from the problems the hydrogen-oxygen fuel cell of the gas abatement apparatus described above, a MEA of an electrochemical reactor in general has low strength and is highly fragile since the MEA is constituted by a sintered body, resulting in a low production yield. The fragility of the MEA in terms of strength is not a problem unique to gas abatement but is a problem shared by fuel cells that generate electric power, for example.

An object of the present invention is to provide an electrochemical reactor that is small in size but high in throughput capacity (1) and that can be operated at a low running cost (2), a method for manufacturing the electrochemical reactor, a gas decomposing element (element that decomposes ammonia, NOx, volatile organic compounds (VOC), or the like), in particular, an ammonia decomposing element that decomposes ammonia, and a power generator that uses an element that generates electrical power among these decomposing elements. Another object of the present invention is to provide an electrochemical reactor that is easy to handle during assembling and has a simple structure and high durability, and a method for manufacturing the electrochemical reactor (3). Solution to Problem

An electrochemical reactor of the present invention is used to decompose gas. The reactor includes a porous anode, a porous cathode paired with the anode, and an ion-conductive material having ion conductivity disposed between the anode and the cathode, and is characterized in that the anode and/or cathode contains surface-oxidized metal particle chains.

Metal particle chains are long thin metal bodies each resembling a string of metal particles. A metal particle chain in a surface-oxidized state has the interior (portion inside the surface layer) that remains unoxidized and retains metal conductivity. Thus, when the anode contains metal particle chains, the chemical reaction between anions migrating from an ion conductive material and molecules in a fluid introduced into the anode from outside the anode can be accelerated with the oxide layers of the metal particle chains (catalytic action), and the chemical reaction at the anode is accelerated by the participation of the anions (acceleration action by charges) (A1). The conductivity for electrons generated by the chemical reactions can be ensured by the metallic portions of the metal particle chains. Consequently, electrochemical reactions accompanying exchange of charges at the anode can be accelerated as a whole.
When the cathode contains metal particle chains, the chemical reaction of molecules in a fluid introduced into the cathode from outside the cathode can be accelerated with the oxide layer of the metal particle chain (catalytic action), the conductivity for electrons supplied from an external circuit is improved, and the chemical reaction at the cathode is accelerated by the participation of the electrons (acceleration action by charges) (A2). Then anions can be efficiently generated from the molecules and transferred to the ion conductive material. Consequently, electrochemical reactions accompanying exchange of charges at the cathode can be accelerated as a whole as with the case of the anode containing the metal particle chains. Whether metal particle chains should be contained in the cathode changes depending on the gas to be decomposed. When metal particle chains are contained in the anode and the cathode (A3), the effects (A1) and (A2) described above can be achieved.
The electrochemical reactions are often regulated by the speed of anions migrating in the ion conductive material or the time of migration. In order to increase the speed of migration of anions, the gas decomposing element is usually equipped with a heating device, such as a heater, to increase the temperature to, for example, 600°C to 800°C. When the temperature is high, not only the ion migration speed but also chemical reactions involving charge exchange at the electrode is accelerated.
The anions migrating from the ion conductive material to the anode are generated by chemical reactions at the cathode as described above and supplied. The electrons and the molecules in a fluid reacts with each other at the cathode, thereby giving anions. The generated anions migrate in the ion conductive material toward the anode. The electrons that participate in the reaction at the cathode are fed from an external circuit (including a storage cell, a power supply, and a power-consuming appliance) that connects between the anode and the cathode. The electrochemical reaction may be a power generating reaction of a fuel cell or an electrolytic reaction.

Metal particle chains can be obtained by precipitation using a solution containing ferromagnetic metal ions and reducing ions by reducing the ferromagnetic metal ions to a metal. The precipitated metal takes the form of fine particles at the initial stage of the precipitation but becomes ferromagnetic after grown to a particular size and forms a moniliform shape or a string shape due to magnetic force. After that, the ferromagnetic metal ions in the solution add layers on the entire moniliform precipitate. Accordingly, the constricted portions at the borders between the metal particles slightly add thickness, the degree of irregularity becomes low, and the entire material becomes smooth. For example, metal particle chains are formed by using a reducing solution containing trivalent titanium ions as a reductant in the co-presence of ferromagnetic metal ions so that the metal ions are precipitated as a metallic material.
Accordingly, the metal in the metal particle chains described above is a material (metal, alloy, or the like) that can form a ferromagnetic material. The anode is often constituted by a sintered material containing ion conductive ceramic and surface-oxidized moniliform metal powder.

Since the surface-oxidized metal particle chains of the anode exhibit a catalytic action for the anode reaction and conducts electrons generated as a result of the anode reaction, the overall electrochemical reactions are accelerated and a high throughput capacity can be achieved with a small element. The gas to be decomposed is introduced to one of the anode and the cathode; however, the fluid to be introduced to the counter electrode may be limited to a fluid that does not generate NOx, carbon dioxide, etc. The gas to be decomposed is introduced to the anode or the cathode. According to the anode of the present invention, at least the reaction at the anode can be accelerated. The decomposition reactions described above do not require a neutralizer or removal of reaction products, and thus operation can be conducted at a low running cost.

The anode and/or cathode may be a sintered body containing metal particle chains mainly composed of nickel (Ni) and an ion conductive ceramic. When the anode is such a sintered material, distribution of the fluid can be ensured at all positions of the anode and the reaction between the molecules in the fluid and the anions can be proceeded while ensuring the catalytic action and the electronic conductivity.

The cathode and/or anode may be composed of a material that contains silver (Ag) or a heat-resistant metal. For example, when the cathode contains silver, the reaction between the molecules in the fluid and the electrons at the cathode can be accelerated by the catalytic action of Ag. Accordingly, anions can be efficiently generated from the molecules in the fluid introduced into the cathode, and sufficient amounts of anions can be supplied to the anode via the ion conductive material.

The anode, the ion conductive material, and the cathode may form a flat plate. In this manner, the decomposition capacity can be adjusted in accordance with the gas exhaust device by adjusting the size of the flat plate and increasing or decreasing the number of flat plates stacked. This flat plate corresponds to a membrane electrode assembly (MEA) having a typical shape. It should be noted that the MEA is not limited to a flat plate and description of a cylindrical MEA is given below.

The anode, the ion conductive material, and the cathode may form a cylindrical body. In other words, the (anode/ion conductive material/cathode) constitutes a cylindrical MEA. When a cylindrical body is used in a gas decomposing element, it is sufficient if a sealing member is disposed at an end of the cylinder body. Accordingly, damage caused by the difference in thermal expansion between the sealing member (usually a glass material since high temperatures are used) and the cylindrical MEA is prevented. In general, a sealing member of a flat-plate MEA is provided in a wide range and when the size of the flat plate is increased, damage tends to occur by the difference in thermal expansion although the thermal expansion coefficient of the glass material constituting the sealing member is matched with that of the MEA as much as possible. When a cylindrical body is used, the sealing member is needed only at the end portion as described above, and thus the stresses generated by the difference in thermal expansion are limited. Moreover, since a cylindrical member is not used in a stacked form, stringent dimensional allowance accuracy is not required. Since the cylindrical body can be relatively easily extended in the longitudinal direction, the reaction capacity or the like can be easily expanded. The reaction capacity can also be increased by providing two or more cylindrical bodies. Compared to the flat-plate META, the cylindrical MEA is easier to assemble into a device, can increase the production yield, and has high durability for long-term use even when the problem associated with the sealing member does not exist. The cylindrical body may have any shape as long as it is cylindrical, for example, it may be straight or curved.

The anode may be positioned on the inner surface side of the cylindrical body and the cathode may be positioned on the outer surface side of the cylindrical body. In decomposing ammonia, ammonia leaking outside gives pungent odor despite a low concentration and is thus preferably passed through the inner side of the cylinder. Since oxidizing gas such as oxygen gas is often introduced into the cathode and oxygen in air is frequently used, the cathode is preferably positioned on the outer surface side of the cylinder considering the contact with oxygen. However, the reversed arrangement or an alternative arrangement may become necessary depending on the gas to be decomposed.

A collector for the anode and/or cathode constituted by a porous metal body may be disposed on the opposite side of the ion conductive material. In this manner, the distribution of the fluid or gas in a gas decomposing element used in the actual world can be ensured due to the collector/electrodes (anode and cathode) portion. Moreover, since high electronic conductivity can be ensured by the collector/electrodes (anode and cathode) portion, exchange of electric power for power generation (fuel cell) or power consumption (electrolyzer) can be assuredly conducted without loss.

The porous metal body may be a metal-plated body. In this manner, a porous metal body with high porosity can be obtained and the pressure loss can be suppressed. The porosity of the metal-plated porous body can be easily increased since the skeleton portion is formed with metal (Ni) plating and the porosity can be controlled by reducing the thickness. The metal-plated porous body is described below.

A first fluid may be introduced into the anode, a second fluid may be introduced into the cathode, the ion conductive material may have oxygen ion conductivity, and electric power may be extracted from the cathode and the anode. Accordingly, the gas to be decomposed may be used as a fuel to generate power by forming a fuel cell with the gas decomposing element.

A heater may be provided and electric power may be supplied to the heater. In this manner, gas can be decomposed at a high energy efficiency.

A third fluid may be introduced into the anode, a fourth fluid may be introduced into the cathode, the ion conductive material may have oxygen ion conductivity, and electric power may be injected from the cathode and the anode. In this manner, the gas to be decomposed can be decomposed by consuming the electric power. In this case, the gas decomposing element conducts electrolysis of the third and fourth fluids at the cathode and the anode. Whether the element conducts electrolysis or serves as a fuel cell is determined on the basis of the electrochemical relationship between the gas to be decomposed and the fluid (air (oxygen) or moisture) that supplies ions involved in the electrochemical reaction. For example, when ammonia is used as the third fluid and carbonate gas is used as the fourth fluid, both (ammonia and carbonate gas) can be decomposed.

An ammonia decomposing element of the present invention includes any one of the electrochemical reactors described above and is characterized in that an ammonia-containing fluid is introduced into the anode and a fluid containing oxygen atoms is introduced into the cathode. In this manner, the oxygen ions generated in the cathode migrate to the anode, and the oxygen ions and ammonia can be reacted with each other in the anode under the catalytic action of the metal oxide layer and the acceleration action of the ions so that electrons generated as a result of the reaction can also migrate rapidly.

A power generator of the present invention includes the gas decomposing element that can extract electric power and an electric power supplying unit for supplying the electric power to another electric device. In this manner, the gas decomposing element can be used as a power generator. The electric power supplying unit may be wires for wiring, terminals, etc.

A gas decomposing element of the present invention includes an electrochemical reactor for a fluid (gas, liquid, etc.), in which any one of the aforementioned electrochemical reactors (ammonia decomposing element is also included in the electrochemical reactors) is used. Such a gas decomposing element will be used in an electrode material and the like that form the foundation in the fields of fluid decomposition and power generation (= fuel cells) accompanying the fluid decomposition, thereby achieving an improved electrochemical reaction efficiency, facility size reduction, and low running cost.

An electrochemical reactor includes a cylindrical membrane electrode assembly (MEA) that includes a first electrode which is one of the anode and the cathode, a second electrode which is the other one of the anode and the cathode, and an oxide solid electrolyte sandwiched between the first electrode on an inner surface side and the second electrode on an outer surface side; a heating device for heating the MEA to an operation temperature higher than normal temperature; and a first collector inserted into an inner surface side of the cylindrical MEA and in contact with the first electrode, wherein the first collector is formed of a conductive wire that extends along an inner surface of the cylindrical body and makes contact in a line manner with the inner surface of the cylindrical body at least at the operation temperature.

The cylindrical MEA has a very simple structure and is stable in terms of strength in assembling an abatement device although an oxide solid electrolyte is used, and high durability can be achieved after the assembly. Installing a collector on the inner side of such a cylindrical MEA is difficult due to the narrowness of the space. It is extremely difficult to install a collector in a narrow space inside the cylinder while saving enough space for allowing the first electrode to come into contact with the reaction components (gas or liquid) for the first electrode. However, as described above, a collector for the first electrode can be very easily installed while saving enough space for allowing the first electrode to come into contact with the reaction components (gas or liquid) for the first electrode when the collector is constituted by a conductive wire aimed to make contact in a line manner with the inner surface. In other words, since the collector is configured to make a conduction contact in a line manner with the inner surface, it naturally becomes possible to save space in which the first electrode comes into contact with the first electrode components (gas or liquid). For example, when the cylindrical MEA has a complicated undulated shape, although substantial man-hours are needed to send in the collector configured to make conductive contact in a line manner with the inner surface according to the present invention, industrial manufacturing processes capable of mass production can be used to reliably install the first collector. Metal wires can be used as the conductive wire. The cross-sectional shape of the conductive wire may be circular, elliptical, rectangular, or any other shape, or a band-shaped wire may be used.
The meaning of "comes into contact in a line manner (or in an overlapping line manner)" is that the conductive wire is not buried in the cylindrical body and that the conductive wire located outside the cylindrical body contacts or abuts the surface of the inner cylinder of the cylinder body, i.e., makes linear contact, to establish a conduction.
The conductive wire may be a twisted wire. In such a case, overlapping wires contact the surface of the MEA. When cross-over portions of weaved conductive wires make contact with the inner cylinder surface of the cylindrical body, a portion where a contact is made in an overlapping line manner is included. The contact made in an overlapping line manner is also included in the meaning of "in a line manner".
Another major advantage of the cylindrical MEA is that the reaction length can be easily increased. When a plate-shaped multilayer-type MEA is used, deformation occurs by the difference in thermal expansion and damage easily occurs by suppression of the deformation, thereby posing limitations as to the size. This can be rephrased as a disadvantage of using an oxide solid electrolyte. However, when a cylindrical body is employed, deformation does not easily occur despite the use of the oxide solid electrolyte and only one MEA is needed. In other words, there is no need to stack a plurality of MEAs. Accordingly, a straight or curved cylindrical MEA having a large length in the longitudinal direction can be relatively easily manufactured.
Since the electrochemical reactions described above reach a reaction rate of a practical level at a temperature of 350°C to 1000°C, the heating device is preferably a heater or the like that surrounds the MEA from the outer side.
A collector for the outer surface side electrode (second electrode) of the cylindrical MEA may take various forms, i.e., from a simple form to an elaborate form. When the electrical conductivity of the second electrode is high, a component as simple as a connecting portion of wiring (very simple form) may be used as the collector.
A low pressure loss can be easily realized by adjusting the inner diameter or the like of the cylindrical MEA. Since no chemicals or the like are needed for the electrochemical reaction, the running cost can be lowered.
When a plurality of MEAs described above are provided in parallel, the amount of reaction per hour can be increased.

The first collector may come into contact with the inner surface of the cylindrical body as a result of thermal expansion of the conductive wire at the operation temperature without using a conductive connecting material. It is easy to predict the difficulty of applying a conductive adhesive while exposing the inner-side electrode (first electrode) over the entire surface at a predetermined ratio. Such a difficulty can be eliminated by employing this structure. For example, a difficult operation of applying a platinum paste in a predetermined continuous pattern onto the inner cylinder surface and baking the applied paste is no longer needed. The thermal expansion coefficient of the metal wire is usually larger than that of ceramics and the like by several ten percent. Accordingly, as long as conductive contact is achieved at the operation temperature, the contact resistance may increase during the course of lowering the temperature to normal temperature or a non-conduction state may occur in a particular region.

The first collector may be elastically stretched in the longitudinal direction at normal temperature so that the outer diameter thereof can be decreased. In this manner, the first collector can be easily installed by elastic deformation during assembling at normal temperature. Since the thermal expansion coefficient of metal is 10 to 200 10⁻⁷/K, a large enough gap (thermal expansion) that facilitates the installation without elastic deformation during the assembling at normal temperature cannot be expected from the thermal expansion caused by the difference between the operation temperature and the normal temperature. Thus, during the installation, a guiding wire or bar-shaped member is used to facilitate insertion of the elastically deformed collector into the inner cylinder and then the elastic deformation is released so that the collector abuts the surface by elastic force. When the elastic deformation is released, the first collector need not be in contact with the inner surface at normal temperature; however, considering the difference in thermal expansion between the conductive wire (mainly metal wire) and the MEA, the first collector almost abuts and is very close to the inner surface. In a strict sense, contact does not have to occur at normal temperature. When contact is made at normal temperature, this contact state (conduction state) is usually maintained at the operation temperature. Thus, the operation is very simple, i.e., the first collector is elastically deformed, passed through the cylindrical body, released from elastic deformation, and fixed. There is no need for a complicated process of applying a conductive paste onto the inner cylinder and baking the applied conductive paste.

The first collector can be formed by one processed conductive wire (three-dimensional unicursal line) that extends on the inner surface side of the cylindrical MEA. The three-dimensional unicursal line can be easily processed. The three-dimensional unicursal line has high elastic deformability at normal temperature, is easy to handle, and can be very easily installed onto the inner surface of the cylindrical body. Accordingly, the production man-hour can be reduced and the production yield can be improved. When a metal having a strength of a particular level or higher at the operation temperature and a thermal expansion coefficient greater than that of the ceramic constituting MEA is used as the wire material, a reliable conduction state can be maintained at the operation temperature.

The first collector may be integrally formed by subjecting a plurality of the conductive wires to at least one of bonding, weaving, and other processing. In this manner, a structure not likely to undergo high-temperature deformation during operation at high temperature and capable of reliably maintaining a conduction state with the MEA inner surface can be obtained in addition to achieving simplicity of manufacture.

The first collector may be a stent structure that supports the cylindrical MEA from the inner surface side at the operation temperature. Accordingly, a first collector can be easily obtained by using techniques in the medical fields and existing manufacturing facilities.
The word "stent" originally refers to an inner-side supporting structure of a tube, the inner-side supporting structure being formed of metal wires or the like and used to keep open a lumen by being placed in a hollow viscus such as a blood vessel, a trachea, or an esophagus. The stent structure of the present invention is similar to the inner-side supporting structure of a medical tube and refers to a structure that abuts and supports the inner surface of the cylindrical MEA in a line or overlapping line manner. The "stent" includes those structures which have wire configurations the same as or similar to those of medical stents. The line construction may be those which are not found in the medical fields as long as the structure has the above-described features. The stent structure is preferably elastically deformable for installation during manufacturing. Since the stent structure is used at high temperature, the stiffness or the like at normal temperature is preferably at a particular level or higher (structure that does not easily soften at high temperature). Regarding the support from the inner surface side at the operation temperature, the stress value range is not particularly limited and the support is considered to be established as long as the stent structure abuts the inner surface of the cylindrical body at the operation temperature. In other words, as long as the structure abuts the inner surface, the first collector of the present invention can achieve the purpose of collecting electricity. It should be noted that a stent structure can be clearly identified as the stent structure when the structure used in the medical fields is employed, and any other structures are frequently identified as collectors having the structures described above. A self-expanding stent structure that expands itself or a balloon-expandable stent that expands as a result of expanding a balloon or the like after the first collector is inserted into the inner surface side may be used as the stent structure. To omit the operation of expansion after insertion, a self-expanding stent is preferred.

At least one inner surface guiding member that guides a fluid from the center toward the inner surface may be further provided inside the cylindrical MEA, the guiding member including plate-shaped portions the density of which is decreased from the center of the bore cross-section toward the inner surface of the MEA. In this manner, the fuel gas or the like can be prevented from passing by and the pressure loss can be reduced while conducting electrochemical reactions at the inner surface-side electrode. The decrease in density of the plate-shaped portions from the center of the bore cross-section toward the inner surface of the MEA need not be strictly defined. For example, it is sufficient if the average density of the plate-shaped portions is decreased in regions formed by dividing the bore into two equal regions (center portion and inner surface-side marginal portion) in the radial direction.

In the MEA, the first electrode may be the anode and the second electrode may be the cathode. Since reducing gas or liquid is introduced into the anode and an oxidizing gas or liquid is introduced into the cathode, reducing components flow inside the MEA. Accordingly, the conductive wire does not undergo high-temperature oxidation even when it is a metal wires. Thus the contact with the first electrode can be maintained in a low resistance state without any maintenance.

The cylindrical MEA may be used to abate ammonia-containing gas by supplying ammonia to the inner side of the cylindrical MEA and bringing the outer side of the cylindrical MEA into contact with air. Since pungent odor can be smelled by leakage of trace amounts of ammonia, ammonia is supplied to the inner side of the cylindrical body and decomposed to a very low concentration by electrochemical reaction so that the MEA is suitable for use in an abatement device of a semiconductor manufacturing apparatus emitting ammonia. In other words, monitoring of the ammonia concentration at the outlet is easy, and a precautionary system for unforeseen contingency can be easily and securely connected without leaking ammonia. A cylindrical MEA can be manufactured at a relatively low cost since the allowance of dimensions etc., is wide and the manufacturing is easy compared to flat-plate multilayer MEAs. High durability is also exhibited in high-temperature (in use)-normal temperature (not in use) thermal cycles during long use.

The second electrode may include silver particles and an ion conductive ceramic and may function as a collector, and the electrochemical reactor does not include a separate collector for the second electrode. In this manner, the oxygen ion-generating reaction at the second electrode can be accelerated by eliminating as much as possible components that obstruct the contact between the second electrode and air or the like while reducing the number of components. Since a collector for the second electrode is omitted, there is no need to consider deterioration of the collector for the second electrode caused by high-temperature oxidation.

The shape of the cylindrical MEA is straight, curved, meandrous, or spiral. Since gas or liquid is used as a fuel component reacted at the electrodes according to the electrochemical reactor of the present invention, the shape of the cylindrical MEA is preferably selected from a wide variety of shapes according to the usage of the reactor and the place of use, etc. A reliable conduction can be established very easily over the entire first electrode on the inner surface side irrespective of which of the first collectors described above is employed and despite the complexity of the cylindrical shape. The first collector can perform a power collecting function with simplicity and reliability uncomparable to collectors having other structures as the shape of the cylindrical body becomes more and more complex.

A method for manufacturing an electrochemical reactor including a cylindrical MEA of the present invention manufactures an electrochemical reactor that operates at an operation temperature higher than normal temperature. This method includes a step of forming a cylindrical MEA that includes a first electrode on an inner surface side, a second electrode on an outer surface side, and a solid electrolyte sandwiched between the first electrode and the second electrode; a step of preparing a first collector for the first electrode of the MEA, the first collector being formed of a conductive wire; and a step of installing the first collector onto the inner surface side of the MEA, in which, in the step of forming the cylindrical MEA and the step of preparing the first collector, the conductive wire is set to make contact in a line manner with an inner surface of the cylindrical body at least at the operation temperature.

According to this method, the first collector can be easily and reliably inserted in a narrow space inside the cylindrical MEA while saving enough space for allowing the first electrode to come into contact with a first electrode component (gas or liquid). Thus, mass production can be efficiently conducted in high production yield.

In the step of installing the first collector, the first collector is elastically stretched in a longitudinal direction thereof to reduce an outer diameter thereof, inserted into the cylindrical MEA, and released at a particular position. In particular, when the first collector is a selF expanding stent structure, the stent structure is inserted into the cylindrical MEA by decreasing a diameter thereof to be smaller than that of the cylindrical MEA and released at a particular position so that the stent structure elastically expands itself and stays at that position.
In this manner, the first collector or the stent structure can be easily installed in the straight cylindrical MEA or curved cylindrical MEA. It is difficult to conceive a method for installing a collector to the inside of the cylindrical MEA as simple and reliable as this method. It should be noted here that after the first collector or the stent structure is inserted and released, a step of fixing the first collector or the stent structure to prevent displacement may naturally be performed. It is necessary to fix the first collector of the stent structure on a terminal or the like to establish connection with external wiring. Advantageous Effects of Invention

An electrochemical reactor of the present invention is small in size, has high throughput capacity, and can be operated at a low running cost. Moreover, handling during assembling is easy, the structure is simple, and the durability is high. When the reactor is suitable for decomposing gas, in particular, ammonia, NOx, VOC (xylene, toluene, etc.), etc. Of the electrochemical reactors described above, those which generate electric power can be used as power generators.

### Brief Description of Drawings

[Fig. 1] Fig. 1 is a cross-sectional view showing a gas decomposing element according to a first embodiment of the present invention.
[Fig. 2] Fig. 2 is a diagram illustrating decomposition of ammonia by using the gas decomposing element shown in Fig. 1 as a fuel cell.
[Fig. 3] Fig. 3 is a diagram illustrating features of the anode of the gas decomposing element of the first embodiment.
[Fig. 4] Fig. 4 is a diagram illustrating features of the cathode of the gas decomposing element according to the first embodiment.
[Fig. 5] Fig. 5 is a diagram illustrating an example of a second embodiment of the present invention in which a gas decomposing element is used as an electrolyzing element.
[Fig. 6] Fig. 6 is a cross-sectional view of a gas decomposing element according to a third embodiment of the present invention.
[Fig. 7] Fig. 7 shows a collector of an inner surface-side electrode (anode) of a cylindrical MEA shown in Fig. 6, part (a) is a diagram showing an example in which one sheet-shaped Ni-plated porous body is wound and part (b) is a diagram showing an example of a combination of a ring-shaped Ni-plated porous body and a rod-shaped Ni-plated porous body.
[Fig. 8] Fig. 8 is a flowchart showing a method for manufacturing a cylindrical MEA.
[Fig. 9] Fig. 9 includes diagrams showing the ammonia decomposing device shown in Fig. 6, part (a) is a diagram showing an example in which one cylindrical MEA is used, and part (b) is a diagram showing an example in which a plurality of cylindrical MEAs are used.
[Fig. 10] Fig. 10 is a cross-sectional view of a gas decomposing element according to a fourth embodiment of the present invention.
[Fig. 11] Fig. 11 is a diagram illustrating a cathode of the gas decomposing element according to the fourth embodiment.
[Fig. 12] Fig. 12 is a diagram illustrating an anode of the gas decomposing element according to the fourth embodiment.
[Fig. 13] Fig. 13 is a diagram showing an ammonia decomposing device, which is an electrochemical reactor according to a fifth embodiment of the present invention.
[Fig. 14] Fig. 14 is a diagram illustrating an electrochemical reactions in the ammonia decomposing device shown in Fig. 13.
[Fig. 15] Fig. 15 is a diagram showing the porosity of an anode.
[Fig. 16] Fig. 16 is a flowchart showing a method for manufacturing a cylindrical MEA.
[Fig. 17] Fig. 17 is a diagram showing a method for manufacturing an electrochemical reactor of the present invention.
[Fig. 18] Fig. 18(a) is a diagram showing an arrangement of one electrochemical reactor and Fig. 18(b) is a diagram showing an arrangement of a plurality of electrochemical reactors.
[Fig. 19] Fig. 19 is a diagram showing a fuel cell, which is an electrochemical reactor according to a sixth embodiment of the present invention.
[Fig. 20] Fig. 20 includes diagrams showing a structure of a first collector of the fuel cell shown in Fig. 19, part (a) is a diagram showing an example in which a single wire is processed into a band having a sine curve, part (b) is a diagram showing an example in which a band is processed into a spiral.
[Fig. 21] Fig. 21 is a diagram showing a modification in which the first collector is a stent structure.

### Description of Embodiments

### (First Embodiment)

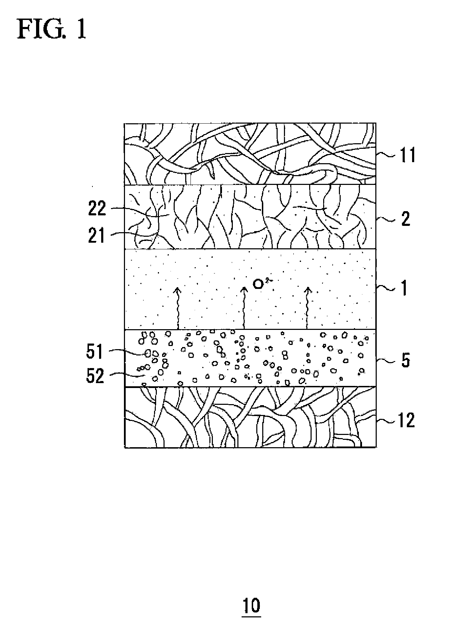

Figure 1 is a diagram showing a gas decomposing element 10 according to a first embodiment of the present invention. In the gas decomposing element 10, an anode 2 and a cathode 5 are disposed with an ion conductive electrolyte 1 therebetween. An anode collector 11 is provided on the outer side of the anode 2, and a cathode collector 12 is provided on the outer side of the cathode 5. The anode 2 is a sintered body mainly constituted by metal particle chains 21 and an ion conductive ceramic (metal oxide) 22 and is a porous body in which a fluid can be distributed. The cathode 5 is also a porous body in which a fluid can be distributed. The cathode 5 is preferably a sintered body mainly constituted by silver (Ag) 51 and an ion conductive ceramic 52. Both the anode collector 11 and the cathode collector 12 are preferably a porous metal body. An example of the porous metal body is a metal porous body including trigonal prism skeletons three-dimensionally aligned and having continuous pores. A typical example is CELMET (trade name) produced by Sumitomo Electric Industries, Ltd. CELMET includes products formed of Ni, stainless steel, and a heat-resistant metal such as Ni-Cr, Ni-Cr-Al, and Ni-W.
The electrolyte 1 may be any ion-conductive material such as a solid oxide, a fused carbonate, phosphoric acid, a solid polymer, and an electrolyte solution. The gas decomposing element 10 can be operated as a fuel cell or an electrolyzer as shown in Table I.

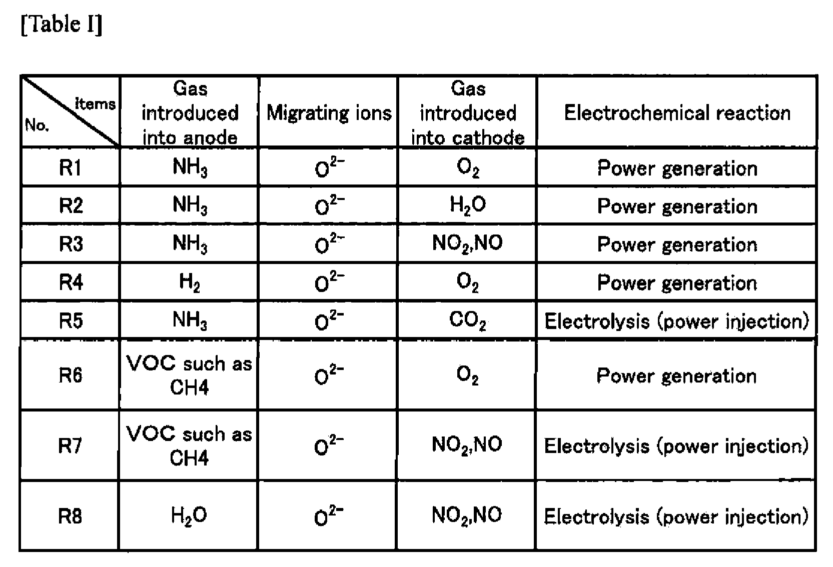

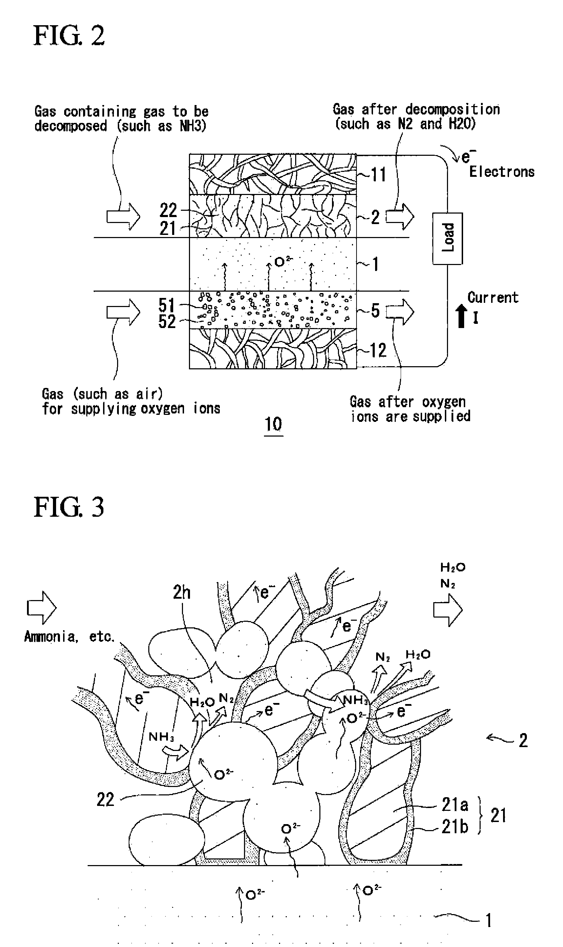

In the first embodiment, as shown in Fig. 2, the case in which the gas decomposing element 10 is used as a fuel cell is described. As for the names of components in a fuel cell, the anode 2 is called a "fuel electrode" and the cathode is called "air electrode". However, in the description, the terms "anode 2" and "cathode 5" are used. In Fig. 2, a fluid (gas) to be decomposed is introduced into the anode 2 and a fluid for supplying oxygen ions is introduced into the cathode. The introduced fluids are discharged after conducting a particular reaction at the anode 2 (cathode 5). The particular reaction is an electrochemical reaction that accompanies power generation. Electric power can be extracted from the anode collector 11 and the cathode collector 12 and the electric power can be supplied to the load. In other words, the gas decomposing element 10 functions as a fuel cell.

Table I presents some of the reaction examples in which a gas decomposing element or electrochemical reactor of the present invention is used. The electrochemical reactions R1 to R4 and R6 presented in Table I are fuel cell reactions that generate electric power. The load for the electric power generated may be a heating device not shown in the drawing, e.g., a heater, built in the gas decomposition element 10. Table I is also cited to explain electrochemical reactions described below.

The anode 2 is a sintered body mainly constituted by metal particle chains 21 having oxide layers formed by surface oxidation, and an oxygen ion-conducting ceramic 22. As the oxygen ion-conducting ceramic 22, scandium-stabilized zirconia (SSZ), yttrium-stabilized zirconia (YSZ), samarium-stabilized ceria (SDC), lanthanum gallate (LSGM), gadolinia-stabilized ceria (GDC), etc., can be used. The cathode 5 is a sintered body mainly constituted by silver (Ag) 51 and an oxygen ion-conducting ceramic 52. In this case, lanthanum strontium manganite (LSM), lanthanum strontium cobaltite (LSC), samarium strontium cobaltite (SSC), lanthanum strontium cobalt ferrite (LSCF), and the like may be used as the oxygen ion-conducting ceramic 52. The electrolyte 1 may be a solid oxide, a fused carbonate, phosphoric acid, or a solid polymer having oxygen ion conductivity. A solid oxide is preferred since size reduction can be achieved and handling is easy. As the solid oxide 1, SSZ, YSZ, SDC, LSGM, GDC, or the like is preferably used.

In this embodiment, the gas to be decomposed is ammonia (NH₃), and the gas that supplies oxygen ions is air, i.e., oxygen (O₂). This corresponds to reaction R1 in Table I. Ammonia introduced into the anode 2 is subjected to the reaction 2NH₃ + 3O²⁻ →N₂+ 3H₂O + 6e⁻ (anode reaction). The fluid after the reaction, i.e., N₂ + 3H₂O, is discharged from the anode. Oxygen in the air introduced into the cathode 5 is subjected to the reaction O₂ + 2e⁻ →20²⁻ (cathode reaction). Oxygen ions pass through the solid electrolyte 1 from the LSM 52 in the cathode 5 and reach the anode 2. The oxygen ions that have arrived at the anode 2 react with ammonia as described above and ammonia is thereby decomposed. The decomposed ammonia is discharged by forming nitrogen gas and water vapor (H₂O). Electrons e' generated at the anode 2 pass through the load 5 and flow toward the cathode 5. As a result of the above-mentioned reaction, a potential difference is generated between the anode 2 and the cathode 5, and the cathode 5 has a higher potential than the anode 2.

### (Features of the embodiment of the present invention)

Figure 3 is a diagram for describing the role of the material constituting the anode 2 and shows the features of the embodiment of the present invention. The anode 2 is constituted by a sintered body of surface-oxidized metal particle chains 21 and SSZ 22. The metal of the metal particle chains 21 is preferably nickel (Ni). A small amount of iron (Fe) may be contained in addition to Ni. More preferably, a trace amount ofTi, e.g., about 2 to 10,000 ppm of titanium, is contained. Nickel itself exhibits a catalytic action that promotes decomposition of ammonia (1). The catalytic action can be further enhanced by inclusion of trace amounts of Fe and/or Ti. Nickel oxide formed by oxidation of Ni can further enhance the accelerating action of the single metal. In addition to the catalytic action described above, oxygen ions are involved in the decomposition reaction at the anode (2). In other words, decomposition is conducted within the electrochemical reaction. Oxygen ions contribute to the anode reaction 2NH₃ + 30²⁻ → N₂ + 3H₂O + 6e⁻ described above by significantly improving the ammonia decomposition rate. Free electrons e⁻ are generated as a result of the anode reaction (3). If electrons e⁻ stay in the anode 2, the progress of the anode reaction is inhibited. The metal particle chains 21 are long, resembling the shape of a string, and an interior 21a coated with an oxide layer 21b is a good conductor metal (Ni). Electrons e⁻ smoothly flow in the longitudinal direction of a string-shaped metal particle chain. Thus, the electrons e⁻ do not stay in the anode 2 but pass through the interiors 21a of the metal particle chains 21 and flow out. The metal particle chains 21 make passage of the electrons e⁻ very smooth. In sum, the features of the embodiment of the present invention are the following (1), (2), and (3) at the anode.
(1) Acceleration of decomposition reaction by the nickel oxide layers of the nickel particle chains (high catalytic function)
(2) Acceleration of decomposition by oxygen ions (accelerated decomposition within electrochemical reaction)
(3) Retention of electronic conductivity by a string-shaped good conductor of metal particle chains (high electronic conductivity)
The anode reaction is greatly accelerated by the features (1). (2), and (3) above.

Decomposition of the gas to be decomposed proceeds by merely increasing the temperature and bringing the gas to be decomposed in contact with a catalyst. This has been disclosed in prior art documents and has been known as mentioned earlier. However, as described above, in an element that constitutes a fuel cell, the decomposition reaction rate dramatically improves when oxygen ions supplied from the cathode 5 through the ion-conducting solid electrolyte 1 are involved in the reaction and electrons resulting from the reaction are conducted to the outside. Notable features of the present invention are the functions of (1), (2), and (3) above and the structure that can achieve such functions.

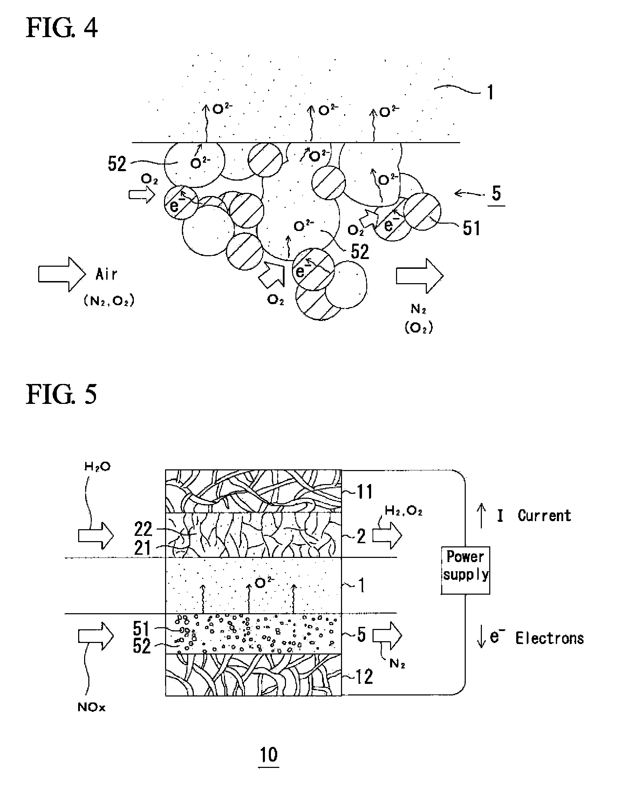

Figure 4 is a diagram for describing the role of the material constituting the cathode 5. Features of the portion of the embodiment of the present invention other than the anode are shown. The cathode 5 of this embodiment is constituted by Ag particles 51 and LSM 52. Of these, Ag 51 has a catalytic function that can greatly accelerate the cathode reaction O₂ + 2e⁻ → 20²⁻. As a result, the cathode reaction can proceed at a significantly high rate. The feature achieved by inclusion of Ag in the cathode can be considered to constitute feature (4) added to the features (1) to (3) above.

The anode reaction and the cathode reaction proceed at a very high reaction rate because of the aforementioned structures of the anode 2 and the cathode 5. Accordingly, large quantities of ammonia can be efficiently decomposed by using a small-size, simple-structure element. Moreover, neither NOx nor carbon dioxide is generated at the anode or the cathode and adverse effects on the environment can be eliminated. Since power generation is possible, the electric power needed for the heater installed in the gas decomposition element 10 of the embodiment need not be supplied from the outside, or the amount of power supplied from the outside can be reduced. Thus, the energy efficiency is high. Since deposition of reaction products does not occur, there is no need for maintenance and the running cost can be dramatically reduced.

The individual components of the gas decomposition element 10 will now be described.

### 1. Anode

### (1) Metal particle chains 21

Metal particle chains 21 are preferably prepared by a reduction precipitation method. The reduction precipitation method for preparing the metal particle chains 21 is described in detail in Japanese Unexamined Patent Application Publication No. 2004-332047 etc. The reduction precipitation method introduced in this document is a method that uses trivalent titanium (Ti) ions as a reductant and trace amounts of Ti is contained in the precipitated metal particles (Ni particles etc.). Accordingly, the particles can be determined as being prepared by the reduction precipitation method that involves trivalent titanium ions when the particles are analyzed to determine the Ti content. Particles of a desired metal can be obtained by changing the metal ion that is present with the trivalent titanium ions. In case of Ni, Ni ions are used. When trace amounts of Fe ions are added, Ni particle chains containing trace amounts of Fe can be formed.

In order to form a chain, the metal must be a ferromagnetic metal and have a particular size or larger. Since Ni and Fe are ferromagnetic metals, metal particle chains can be easily formed. The size requirement is needed during the process of forming an integral metal body, in which magnetic domains are generated in a ferromagnetic metal and become magnetically coupled to each other and a metal is precipitated by keeping the coupled state, resulting in growth of metal layers. After metal particles of a particular size or larger are magnetically coupled to each other, precipitation of the metal continues. For example, the necked portions at the borders between the coupled metal particles grow thicker along with other portions of the metal particles. The average diameter D of the metal particle chains 21 contained in the anode 2 is preferably in the range of 5 nm to 500 nm. The average length L is preferably in the range of 0.5 µm to 1000 µm. The ratio of the average length L to the average diameter D is preferably 3 or more. Alternatively, the metal particle chains may have dimensions outside these ranges.

### (2) Surface oxidation

Preferable techniques for surface oxidation are (i) thermal oxidation by a vapor phase method, (ii) electrolytic oxidation, and (iii) chemical oxidation. If (i) is employed, treatment is preferably conducted in air at 500 to 700°C for 1 to 30 minutes. This is the simplest technique and the oxide film thickness is difficult to control. If (ii) is employed, surface oxidation is conducted by anodization by applying a potential of about 3 V on a standard hydrogen electrode basis, but the oxide film thickness can be controlled by adjusting the amount of electric power depending on the surface area. However, when the area to be treated is large, it is difficult to uniformly form an oxide film. If (iii) is employed, surfaces are oxidized by being immersed in a solution dissolving an oxidant such as nitric acid for about 1 to 5 minutes. The oxide film thickness can be controlled by the length of time, temperature, and type of oxidant; however, washing off of the chemicals requires work. Although any of these techniques is preferred, (i) or (iii) is more preferable.

The thickness of the oxide layer is preferably 1 nm to 100 nm and more preferably 10 nm to 50 nm. The thickness may be outside this range. When the oxidized film is too thin, the catalytic function becomes insufficient. Moreover, the film may be easily metalized even in a slightly reductive atmosphere. If the oxide film is too thick, although sufficient catalytic properties are retained, the electronic conductivity at the interface is degraded and the power generation performance is lowered.

### (3) Sintering

The average diameter of the SSZ raw material powder is about 0.5 µm to 50 µm.

The blend ratio of the surface-oxidized metal particle chains 21 and SSZ 22 is in the range of 0.1 to 10 in terms of molar ratio.

Sintering is conducted for 30 to 180 minutes in, for example, an air atmosphere by retaining a temperature in the range of 1000°C to 1600°C.

### 2. Cathode

### (1) Silver

The average diameter ofAg particles is preferably 10 nm to 100 nm.

### (2) Sintering

The average diameter of the ion conductive ceramic such as LSM or LSCF is preferably about 0.5 µm to 50 µm.

The blend ratio of silver to the ion conductive ceramic such as LSM or LSCF is preferably about 0.01 to 10.

Regarding the sintering conditions, a temperature of 1000°C to 1600°C is retained for 30 to 180 minutes in an air atmosphere.

### (Second Embodiment)

Figure 5 is a diagram showing a gas decomposing element according to a second embodiment of the present invention. In general, the reaction in this embodiment is an electrolytic reaction as shown by R5, R7, and R8 in Table I. In other words, the gas decomposing element 10 is an electrolyzing element and decomposes gas (in particular, NOx in the case of Fig. 5) by injecting electric power. Air is introduced into the anode 2 and NOx is introduced into the cathode 5. Although the gas to be decomposed is introduced to the anode 2 in the first embodiment, the gas to be decomposed is introduced into the cathode 5 in this embodiment. The anode reaction is 20²⁻ → O₂ + 4e⁻. The cathode reaction in the case of NO is 2NO + 4e⁻ → N₂ + 2O²⁻. A potential difference (voltage) is applied from the outside between the collector 11 of the anode 2 and the collector 12 of the cathode 5 so that the potential of the anode is higher. The external power source consumes the electric power for the gas decomposition element 10. This reaction is R8 in Table I.

The anode 2/electrolyte 1/cathode 5 and the collectors 11 and 12 have the same structures as in the first embodiment although there is a difference between the embodiments in terms of whether the electric power is generated or consumed. Thus, acceleration of the reaction by nickel oxide (high catalytic function) (1), and retention of electronic conductivity by string-shaped conductors of metal particle chains (high electronic conductivity) (2) can be achieved by the surface-oxidized metal particle chains in the anode 2. As for the cathode 5, the cathode reaction 2NO + 4e⁻ → N₂ + 2O²⁻ can be accelerated by silver. As a result, large quantities of gas can be rapidly processed with a small simple element, gas that adversely affects the environment is not generated, and the maintenance cost (running cost) is low.

In R7 of Table I, NOx is introduced into the cathode and decomposed as with the NOx of this embodiment. Meanwhile, volatile organic compounds (VOC) are introduced into the anode. VOC are also toxic gas since they generate photochemical oxidants, and in this sense, the gas introduced into the anode can also be considered as the gas to be decomposed. In such a case also, decomposition of the gas can be performed by causing the gas decomposing element to consume electric power.
As described in the first embodiment, decomposition of gas to be decomposed in the presence of a catalyst is well known. However, in this embodiment, oxygen ions are involved in the electrochemical reaction and the anode is configured to have the structures and effects of (1) and (2) above so that the reaction rate can be significantly improved.

### (Third Embodiment)

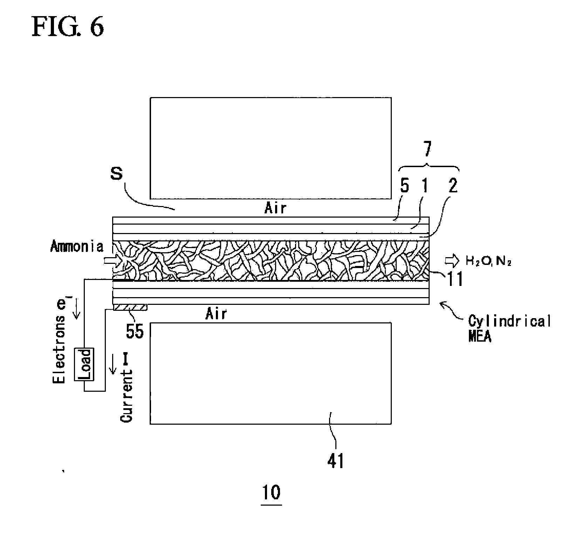

Figure 6 is a diagram showing a gas abatement device, which is an electrochemical reactor of a third embodiment of the present invention, in particular, an ammonia decomposing device 10. According to the ammonia decomposing device 10, an anode (first electrode) 2 covers the inner surface of a cylindrical solid electrolyte 1, and a cathode (second electrode) 5 covers the outer surface to form a cylindrical MEA 7 (1, 2, 5). In general, the cylindrical body may be twisted into, for example, a spiral shape or a serpentine shape, but the MEA shown in Fig. 6 has a straight cylindrical shape. According to the electrochemical reactor 10 of this embodiment, a porous metal body 11 is disposed to fill the inner cylinder of the cylindrical MEA 7. The inner diameter of the cylindrical MEA is, for example, about 20 mm and may be changed depending on the device applied.
This embodiment features that the MEA 7 has a cylindrical shape. Because the MEA 7 has a cylindrical shape, it is sufficient if a sealing member is disposed at an end of the cylinder body in assembling a gas decomposing device 10. Accordingly, damage caused by the difference in thermal expansion between the sealing member not shown in the drawing and the cylindrical MEA is prevented. Since the sealing member is for use at high temperature, a glass-based material is usually used and the thermal expansion coefficient thereof is adjusted to be close to that of the cylindrical MEA 7 as much as possible. In the case of flat-plate MEAs, the sealing member is provided in a wide range. Thus, an increase in size of the flat plate easily causes damage due to the difference in thermal expansion. According to the cylindrical MEA 7, the sealing member is provided only at the end portion as described above, and thus the stresses generated by the difference in thermal expansion are limited. Moreover, since the cylindrical MEA is not used in a stacked form, stringent dimensional allowance accuracy is not required. Since the cylindrical MEA 7 can be relatively easily extended in the longitudinal direction, the reaction capacity or the like can be easily expanded. The reaction capacity can also be increased by providing two or more cylindrical MEA 7. Compared to the flat-plate MEA, the cylindrical MEA 7 is easier to assemble into a device, can increase the production yield, and has high durability for long-term use.

The porous metal body 11 serving as a collector for the anode 2 is preferably a metal-plated body. A metal-plated porous body, in particular, a Ni-plated porous body or CELMET (trade name) described above is preferably used as the porous metal body 11. A Ni-plated porous body can have a high porosity, e.g., 0.6 to 0.98. As a result, the porous metal body exhibits excellent gas permeability while functioning as a collector for the anode 2, i.e., the inner-surface-side electrode. At a porosity less than 0.6, the pressure loss becomes high, the energy efficiency is degraded if forced circulation is conducted using a pump or the like, and the ion conductive material may undergo bending deformation, which is not preferred. In order to reduce the pressure loss and prevent damage on the ion conductive material, the porosity is preferably 0,8 or more and more preferably 0.9 or more. On the other hand, at a porosity exceeding 0.98, the electrical conductivity is degraded and the power collecting function is lowered.

The Ni-plated porous body 11 and the anode 2 must make conductive contact with each other at an operation temperature of 650°C to 950°C needed for ammonia decomposition. The conditions for making the conductive contact are unquestionably satisfied since the thermal expansion coefficient ofNi is larger than that of the ceramic. Even when a porous body plated with a metal having a low thermal expansion coefficient is used, the power-collecting function is maintained in the case where the cylindrical MEA 7 is placed in a horizontal direction (axially horizontal). This is because the porous body will always come into contact with the cylindrical MEA in the lower part although a space may be formed in the upper part. In particular, since ammonia is fed to the inner side of the cylindrical MEA, the surface of the metal porous body 11 remains unoxidized due to the reducing action of ammonia and can always maintain a conductive contact with the anode 2.

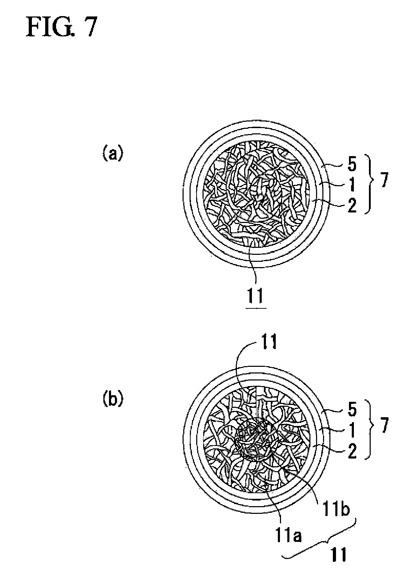

Figure 7 is a diagram showing an anode collector 11 formed of a sheet-shaped metal porous body. Fig. 7(a) shows a wound sheet-shaped metal porous body 11 in which an end of the sheet is thinned to eliminate a straight gap extending along the axial line. In the case of ammonia abatement, strong pungent odor is smelled unless the outlet concentration after abatement is 10 ppm or less, and preferably no straight gap is generated. If there is a straight gap, ammonia or ammonia-containing gas passes through the gap. As long as there is no straight gap and the space is filled with the porous body 11, the possibility that ammonia or ammonia-containing gas will contact the anode 2 constituting the inner surface is increased.
Referring to Fig. 7(b), a sheet-shaped metal porous body is wound into a ring shape to serve as an inner surface-side porous body or ring-shaped porous body 11a, and a rod-shaped porous body 11b is inserted in the center. Preferably, the size of the pores in the rod-shaped porous body 11b is made smaller than that of the ring-shaped porous body 11a so that more gaps come closer to the anode 2 at the outer side than to the central portion. In other words, it is preferable to increase the resistance for the flow of gas passing through the rod-shaped porous body 11b so that more gas can flow in the ring-shaped porous body 11a having a smaller flow resistance. As a result, ammonia or the like can easily contact the anode 2 and the like and become decomposed. The rod-shaped porous body at the center may be replaced by a mere non-porous solid rod-shaped body.

In this ammonia decomposing device 10, i.e., an electrochemical reactor, ammonia-containing gas is introduced into the inner side (anode 2) of the cylindrical MEA 7, and the outer surface side (cathode 5) is brought into contact with air. In Fig. 6, a space S on the outer side of the cylindrical MEA is an air space. The cathode 5 reacts with oxygen (O₂) in air. Ammonia introduced into the anode 2 on the inner surface of the cylindrical MEA 7 undergoes the following anode reaction with oxygen ions as in the first embodiment:

(Anode reaction) 2NH₃ + 30²⁻ → N₂ + 3H₂O + 6e⁻

The gas N₂ + 3H₂O after the reaction flows through the inner surface side (inner cylinder) of the cylindrical body. Oxygen in air in contact with the cathode 5 on the outer side undergoes the following cathode reaction with electrons e' supplied from the external wiring:

(Cathode reaction): O₂ + 2e⁻ → 2O²⁻

As a result of the cathode reaction, the oxygen ions O²⁻ generated at the outer surface of the MEA 7 migrate toward the anode 2 on the inner surface side in a thickness direction via the solid electrolyte 1. The electrochemical reaction described above can yield a practical decomposition rate at a high temperature of 650°C to 950°C. Thus, a heating device 41 such as heater is provided.
The electrochemical reaction for ammonia decomposition corresponds to reaction R1 in Table I. The ammonia decomposition reactions other than R1 are R2, R3, and R5, as indicated in Table I. Reactions R2 and R3 are also power-generating reactions as with reaction R1, but reaction R5 is a reaction that involves injection of electric power. It should be noted that the gas emitted from a semiconductor manufacturing apparatus contains not only ammonia but also hydrogen. In such a case, reaction R4 proceeds in parallel. Since both reactions are power-generating reactions, electric power can be supplied to the load.

The material of the cylindrical MEA 7 described above is itself fragile (in terms of strength) but the strength can be increased by taking a cylindrical shape (a1). Such a MEA has a stable strength compared to a plate-shaped multilayer MEA in which multiple thin sheets of MEA are stacked. Accordingly, in assembling a gas decomposition device 10, the problem of damage that occurs during handling and that is caused by application of small force can be avoided, and the production yield can be improved (a2). A plate-shaped multilayer MEA easily breaks even by slight holding unless the dimensional accuracy is high. Moreover, even after the assembly, a plate-shaped multilayer MEA tends to break from a portion where stresses are concentrated by the difference in thermal expansion since heating and cooling are repeated during the cycle of operation and non-operation. With regard to this point, the cylindrical MEA 7 is fixed at an end and thus the processing accuracy need not be high (a3). There are less portions where the stresses are concentrated or restrained with a sealing member or the like and where damage is likely to occur due to the difference in thermal expansion during the heating-cooling cycle (a4). In particular, even when the stresses are increased by the difference in thermal expansion, the cylindrical MEA can be deformed within particular range without damage. In this respect, the cylindrical MEA is stronger than the multilayer flat-plate MEA whose allowance for deformation is small. Accordingly, the cylindrical MEA has high long-term durability for repeated use and disuse. Furthermore, since the length of the cylindrical MEA 7 can be easily increased, it is easy to increase the reaction length and the performance of one cylindrical MEA can be easily expanded (a5).
According to the gas decomposing device 10 of this embodiment, ammonia is passed through the inner surface side of the cylinder and decomposed to a very low concentration. Thus, ammonia can be substantially eliminated under sealing. Thus, advantages of (a1) to (a5) can be obtained by employing a simple cylindrical structure.

The materials constituting the cylindrical MEA 7 are the same as those of the first embodiment and their effects are also the same.
The anode 2 is preferably a sintered body mainly constituted by metal particle chains 21 having oxide layers formed by surface oxidation, and an oxygen ion-conducting ceramic 22. As the oxygen ion-conducting ceramic 22, scandium-stabilized zirconia (SSZ), yttrium-stabilized zirconia (YSZ), samarium-stabilized ceria (SDC), lanthanum gallate (LSGM), gadolinia-stabilized ceria (GDC), etc., can be used.
The cathode 5 is preferably a sintered body mainly constituted by silver (Ag) 51 and an oxygen ion-conducting ceramic 52. In this case, lanthanum strontium manganite (LSM), lanthanum strontium cobaltite (LSC), samarium strontium cobaltite (SSC), lanthanum strontium cobalt ferrite (LSCF), and the like may be used as the oxygen ion-conducting ceramic 52.
The solid electrolyte 1 may be a solid oxide, a fused carbonate, phosphoric acid, or a solid polymer having oxygen ion conductivity. A solid electrolyte already sintered and have a cylindrical shape is purchased. As the solid oxide 1, SSZ, YSZ, SDC, LSGM, GDC, or the like is preferably used.

The cathode 5 composed of the materials described above has a high electrical conductivity due to inclusion of the silver particles 51. Thus, as shown in Fig. 6, it is sufficient to provide a connecting terminal 55 at one end of the cathode 5. In contrast, the anode 2 does not contain a material having a high electrical conductivity and has a low electrical conductivity, i.e., exhibits electric resistivity. Thus, the collector 11 is needed.
Although the advantages of causing toxic substances to flow in the inner side of the cylindrical body have been described heretofore, the technique for reliably placing a collector on the inner surface side of a cylindrical body has not been sufficiently established. Although future demand is expected, there has been no specific technique. Usually, the inner diameter of a cylindrical body is not sufficiently large. There has not been a collector that can reliably establish conduction by contacting the inner electrode (e2) while securing a space large enough to allow a gas component to flow therein and to react with the inner electrode by making contact (e1) and that can be easily industrially obtained without any complicated work (e3). The gas component flowing in the inner surface side is reducing gas and thus the effect for establishing the conduction (e2) can be more reliably achieved for a long period of time.
In this embodiment, a Ni-plated porous body 11 is used to easily achieve (e1) to (e3) above.

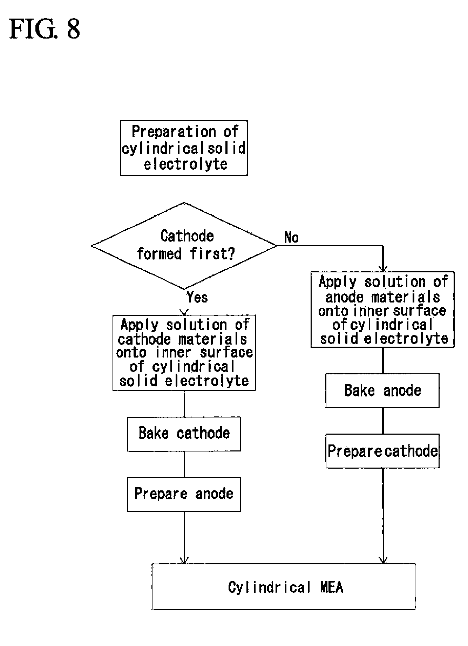

Next, the outline of the method for manufacturing the cylindrical MEA 7 is described with reference to Fig. 8. Figure 8 shows a process of baking the anode 2 and the cathode 5 separately. First, a commercially available cylindrical solid electrolyte 1 is prepared by purchase. Next, in the case where the cathode 5 is to be formed, a solution of cathode constituent materials dissolved in a solvent to yield particular flowability is prepared, and the solution is uniformly applied to the inner surface of the cylindrical solid electrolyte. Then baking is conducted under conditions suitable for the cathode 5. Then the anode 2 is formed. There are many variations of the method in addition to the manufacturing method shown in Fig. 6. When baking is to be conducted only once, the components are not separately baked as in the method shown in Fig. 8; instead, all components are formed in a green state by application and baked at the last stage under conditions common to all the components. There are many other variations and the manufacturing conditions can be determined by comprehensively considering the materials constituting the individual components, target decomposition efficiency, manufacturing cost, etc.

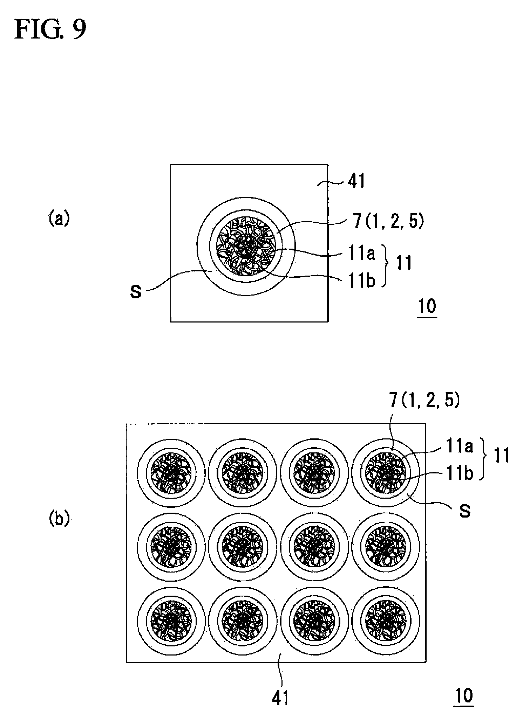

Figure 9(a) is a gas abatement device that uses one cylindrical MEA 7, and Fig. 9(b) is a gas abatement device that uses a plurality (twelve) cylindrical MEAs 7 shown in Fig. 9(a) aligned parallel to each other. When the throughput capacity is not enough with one MEA 7, a plurality of MEAs aligned parallel to each other may be provided to increase the throughput capacity without a complicated process. A collector which is a metal porous body 11 I is inserted into the inner surface side of each of the cylindrical MEAs 7 and ammonia-containing gas is fed to the inner surface side. In Fig. 9, the metal porous body 11 having a structure shown in Fig. 7(b) is illustrated but the metal porous body 11 may have any other structure. A space S is formed on the outer surface side of the cylindrical MEA 7 so that the outer surface contacts high-temperature air or high-temperature oxygen. Although ammonia-containing gas is supplied to the inner surface side of the cylindrical MEA 7, it is difficult to reduce the ammonia concentration to a very low level if the gas merely passes therethrough. Thus, the porosity of the porous bodies 11a and 11b shown in Fig. 7(b) is preferably set by considering the pressure loss and the ammonia outlet concentration.
A heater 41, i.e., a heating device, may be provided by holding together the plurality of cylindrical MEAs 7 aligned in parallel. Because the MEAs are held together, size reduction can be achieved.

### (Fourth Embodiment)

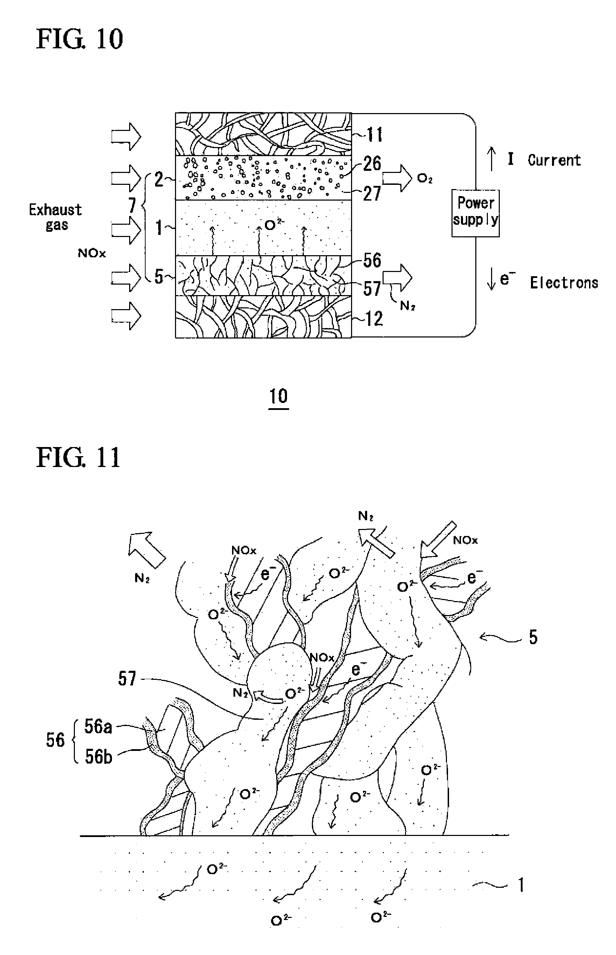

Figure 10 is a cross-sectional view of a gas decomposing device 10 according to a fourth embodiment of the present invention. The gas decomposing device 10 is used to decompose NOx. The gas decomposing device 10 is disposed in the exhaust channel through which NOx-containing gas is discharged and NOx is decomposed at a cathode 3. Although the exhaust gas is not expected to contain a particular gas component that is paired with NOx, i.e., (decomposition of NOx at the cathode 3/decomposition of a "particular gas" at an anode 2), the particular gas component may be contained in the exhaust gas. However, it increases the cost to intentionally introduce the particular gas component into the exhaust channel (e.g., a muffler); thus, the particular gas component is not intentionally contained in the exhaust gas. Oxygen molecules (oxygen gas) are generated in the anode 2 as a result of the reaction of oxygen ions and the like that have been generated in the cathode 3 and migrated through a solid electrolyte 1. The power fed from a power supply used by the gas decomposing device 10 drives this chemical reaction. The gas decomposing device is operated by being heated to a temperature of 250°C to 650°C so that the rate the decomposition reaction is at a practical level.

In general, a MEA 7 shown in Fig. 10 is a flat plate and plural MEAs 7 are stacked with interconnectors serving as conductive members or collectors inserted between the layers of the MEAs 7. Stainless-steel plates processed to have a bellows shape or a ridge shape are used as the interconnectors; however, the Ni-plated porous bodies 11 and 12 described above may be used as the interconnectors. In Fig. 10, only one layer of MEA 7 sandwiched by interconnectors 11 and 12 is shown; however, in practice, a laminated body constituted by two or more layers of MEAs is often used such as (interconnector 11/MEA 7/interconnector 12/MEA 7/interconnector 11).
In such a case, the portions of the bellows-shaped metal plate that come into contact with the MEA are the ridged flat tops. The bellows-shaped plate has a large difference in height between the protruded parts and the recessed parts and the pitches of the protruded and recessed parts are also large. The MEA is known to be brittle since the solid electrolyte 1, the anode 2, and the cathode 3 are thin sintered bodies. When MEAs are stacked with bellows-shaped metal plates therebetween and the sections under pressing are misaligned, a bending stress and the like are applied to the MEAs, easily resulting in damage. Since thermal stress caused by the temperature difference is also applied during heating, there is a stronger tendency of damage. As described above, when a MEA is sandwiched and held from both sides using myriads of fine connecting portions uniformly scattered over the surface of a metal-plated body, the metal plated body acts as if it is a cushioning material. Thus, neither bending stress nor high local stress is applied to the MEA. As a result, metal porous bodies can serve as a buffering material against external force and the like and fragile MEAs can be reliably and stably held between the metal porous bodies.

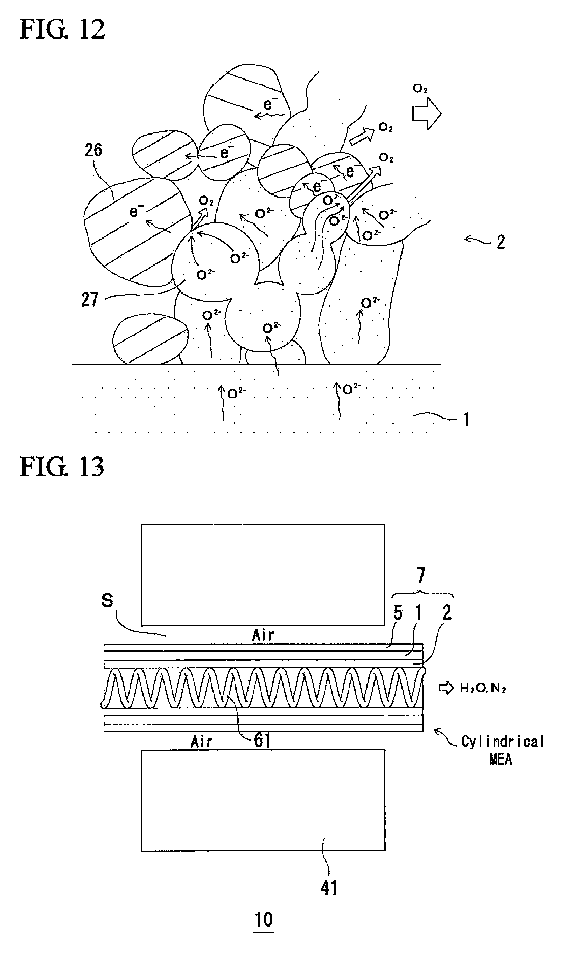

In this embodiment, as shown in Fig. 11, the cathode 5 is preferably formed of an oxygen ion-conducting electrolyte 57 and oxide layer-coated Ni particle chains 56 constituted by Ni particle chains 56a and oxide layers 56b. As shown in Fig. 12, the anode 2 is preferably formed of an oxygen ion-conducting ceramic 27 and catalyst silver particles 26. For ammonia decomposition, silver particles are contained in the cathode 5 and the Ni particle chains are contained in the anode 2; however, this embodiment directed to NOx decomposition is different from the first and third embodiments in that the silver particles 26 are contained in the anode 2 and the Ni particle chains 56 are contained in the cathode 5. The materials for the cathode 5 and the anode 2 are described in detail below.

NOx in the mixed gas contacting or entering the cathode 3, which is a sintered body, undergoes the following reactions so that oxygen ions are transferred to the solid electrolyte 1 through the ion conductive ceramic 57. In the cathode, a cathode reaction 2NO₂ + 8e⁻ → N₂ + 4O²⁻ or 2NO + 4e⁻ → N₂ + O²⁻ occurs. Oxygen ions O²⁻ generated by the cathode reaction are headed toward the anode 2 via the solid electrolyte 1 in which an electric field is formed.
In contrast, the following reaction occurs in the anode 2 between the oxygen ions O²⁻ that have migrated through the solid electrolyte 1. The anode reaction O²⁻ + O²⁻ → O₂ + 4e⁻ occurs. The electrons e⁻ reach the cathode 3 from the anode 2 via an external circuit and contribute to the aforementioned cathode reaction.
The electrochemical reactions described above do not correspond to any of the reactions in Table I.

The electrochemical reactions of decomposing NOx in the cathode 3 and generating oxygen gas in the anode of the device placed in the mixed gas, i.e., exhaust gas, is an electrolytic reaction that does not proceed unless electric power is fed. Thus, a power supply is necessary. The power supply shown in Fig. 10 may be a power supply that applies a voltage of 10 V to 20 V between the anode 2 and the cathode 3 or a power supply that applies a higher voltage, e.g., a nominal voltage of about 50 V. Under application of the voltage, the overall electrochemical reactions including the anode reaction and the cathode reaction are accelerated, and the time taken for oxygen ions to migrate through the solid electrolyte 1 can be shortened by the electric field formed in the solid electrolyte 1. In most cases, the rate of the decomposition reaction is regulated by the time taken for oxygen ions to migrate through the solid electrolyte 1; thus, acceleration of the oxygen ions by the electric field is effective for improving the decomposition reaction rate.

The cathode 5 is preferably a sintered body mainly constituted by the oxide layer-coated Ni particle chains 56 constituted by Ni particle chains having surface oxide layers coating the particles, and the oxygen ion-conducting ceramic 57. As the oxygen ion-conducting ceramic, scandium-stabilized zirconia (SSZ), yttrium-stabilized zirconia (YSZ), samarium-stabilized ceria (SDC), lanthanum gallate (LSGM), gadolinia-stabilized ceria (GDC), etc., can be used. When surface-oxidized metal particles, in particular, surface-oxidized metal particle chains (string-shaped) 56 are contained in addition to the oxygen ion-conducting ceramic 57, the catalytic effect can be enhanced and the electron conductivity can be increased. Thus, the cathode reaction described above can be accelerated. The conductive portions (metallic portions coated with the oxide layers) of the metal particle chains may be composed ofNi only or Ni and Fe, Ti, etc.
The anode 2 is preferably a sintered body mainly constituted by silver particles (catalyst) 26 and an oxygen ion-conducting ceramic 27. Lanthanum strontium manganite (LSM), lanthanum strontium cobaltite (LSC), samarium strontium cobaltite (SSC), lanthanum strontium cobalt ferrite (LSCF), and the like may be used as the oxygen ion-conducting ceramic 27.
The types of the oxygen ion-conducting ceramic contained in the anode 2 and the cathode 5 according to this embodiment directed to NOx decomposition are the reverse of the case of decomposing ammonia. Thus, the magnitude of the electric resistance at the anode 2 and the cathode 5 is also reversed between the NOx decomposing device and the ammonia decomposing device. That is, in the ammonia decomposing device, the electric resistance of the cathode 5 is low and that of the anode 2 is high since the anode 2 contains no silver and the cathode 5 contains silver. In the NOx decomposing device, this is reversed.

### (Regarding electrochemical reactions in which an electrochemical reactor of the present invention is used)

The electrochemical reactor of the present invention is used in all of gas decomposition reactions R1 to R8 of Table I and other gas decomposition reactions. The fourth embodiment does not correspond to any of the reactions in Table I, and the same NOx and impurity gas are supplied to the anode and the cathode. Since voltage is applied, oxygen ions react with each other in the anode to generate oxygen gas and the oxygen gas is released.
Unlike the fourth embodiment, gas different from the gas introduced into the cathode may be introduced into the anode, including the decomposition of NOx. According to Table I, in the case of NOx decomposition, ammonia is used as the gas that is paired with NOx (gas to be decomposed in the fuel electrode) to enable reaction R3. Since this is a power-generating reaction, there is no need to apply voltage from outside. Accordingly, a heater for heating may be disposed as a load in the external circuit. Instead of ammonia, water vapor or VOC may be used (reaction R8 or R7). In such a case, electric power must be injected as in the fourth embodiment.

Regarding abatement of ammonia, reactions R1 to R3 and R5 are possible. Among these, reaction R5 is an electrolytic reaction and not a fuel cell reaction. However, the only difference is whether the electric power is extracted or injected and the rest is the same as the first embodiment from the electrochemical reaction standpoint. Volatile organic compounds (VOC) can also be decomposed. The gas decomposing devices having the structures shown in Figs. 6 and 9 can be employed in all of these electrochemical reactions and other similar electrochemical reactions.

### (Fifth Embodiment)

Figure 13 is a diagram showing a gas abatement device, which is an electrochemical reactor of a fifth embodiment of the present invention, in particular, an ammonia decomposing device 10. According to this ammonia decomposing device 10, an anode (first electrode) 2 covers the inner surface of a cylindrical solid electrolyte 1, and a cathode (second electrode) 5 covers the outer surface to form a cylindrical MEA 7 (1, 2, 5). In general, the cylindrical body may be twisted into, for example, a spiral shape or a serpentine shape, but the MEA shown in Fig. 13 has a straight cylindrical shape. In the electrochemical reactor 10 of this embodiment, a spiral metal wire 61 is in contact in a line manner with the inner surface of the cylindrical MEA 7 at the operation temperature to collect electricity (conduction). The operation temperature is in the temperature range of 550°C to 950°C.

The difference in thermal expansion between the metal wire 61 and the MEA 7 is not enough to create a large gap between the two at normal temperature while the two components contact each other at the operation temperature. Accordingly, the spiral diameter of the spiral metal wire 61 is preferably set to be slightly larger than the inner diameter of the MEA 7 at normal temperature in a stress-free state. In inserting the spiral metal wire 61 into inside the cylindrical MEA 7, the spiral metal wire 61 is preferably stretched in the axial direction so that the outer diameter (spiral diameter) of the spiral is assuredly made smaller than the inner diameter of the MEA. When inserted, the spiral metal wire 61 is slightly stretched in the axial direction so that the spiral diameter is decreased to match the inner diameter of the MEA 7. In other words, the spiral metal wire is slightly stretched compared to when the spiral metal wire is in a stress-free state so that the outer diameter is decreased and the spiral metal wire contacts the inner surface of the MEA 7. Under such an insertion state, the spiral metal wire 61 is urged against the inner surface-side electrode (anode) 2 of the MEA 7 by elastic force as it tries to expand. This elastic force is generated at normal temperature. It is sufficient if the spiral metal wire 61 comes into contact with the inner surface of the MEA 7 at the operation temperature. Thus, it is not essential that this elastic force be generated.

A nickel wire is preferably used as the spiral metal wire 61 considering the strength at high temperature, etc. The diameter of the nickel wire depends on the current generated by the electrochemical reactor 10. For example, when a cylindrical MEA 7 having an inner diameter of 18 mm is used in the ammonia abatement device, a nickel wire with a diameter of 1 mm is used. The linear expansion coefficient of nickel is 13 × 10⁻⁵ K⁻¹. In contrast, that of LaSrCrO, YSZ, or the like used in the electrodes of the MEA is 0.8 to 1.2 × 10⁻⁵ K⁻¹. The linear expansion coefficient of the metal is greater by several ten percent.

In this ammonia decomposing device 10, i.e., an electrochemical reactor, ammonia-containing gas is introduced into the inner side (anode 2) of the cylindrical MEA 7, and the outer surface side (cathode 5) is brought into contact with air. The cathode 5 reacts with oxygen (O₂) in air. Ammonia introduced into the anode 2 on the inner surface of the cylindrical MEA 7 undergoes the following anode reaction with oxygen ions:

(Anode reaction) 2NH₃ + 3O²⁻ →N₂ + 3H₂O + 6e⁻

The gas N₂ + 3H₂O after the reaction flows through the inner surface side (inner cylinder) of the cylindrical body. Oxygen in air in contact with the cathode 5 on the outer side undergoes the following cathode reaction with electrons e⁻ supplied from an external wiring:

(Cathode reaction): O₂ + 2e⁻ → 2O²⁻

As a result of the cathode reaction, the oxygen ions O²⁻ generated at the outer surface of the MEA 7 migrate toward the anode 2 on the inner surface side in a thickness direction via the solid electrolyte 1. The electrochemical reaction described above can yield a practical decomposition rate at a high temperature of 650°C to 950°C. Thus, a heating device 41 such as heater is provided.
The electrochemical reaction for ammonia decomposition corresponds to reaction R1 in Table I. The ammonia decomposition reactions other than R1 are R2, R3, and R5, as indicated in Table I. Reactions R2 and R3 are also power-generating reactions as with reaction R1, but reaction R5 is a reaction that involves injection of power. It should be noted that the gas emitted from a semiconductor manufacturing apparatus contains not only ammonia but also hydrogen. In such a case, reaction R4 proceeds in parallel. Since both reactions are power-generating reactions, electric power can be supplied to a load.

The material of the cylindrical MEA 7 described above is itself fragile (in terms of strength) but the strength can be increased by taking a cylindrical shape (a1). Such a MEA has a stable strength compared to a plate-shaped multilayer MEA in which multiple thin sheets of MEA are stacked. Accordingly, in assembling a gas decomposition device 10, the problem of damage that occurs during handling and that is caused by application of small force can be avoided, and the production yield can be improved (a2). A plate-shaped multilayer MEA easily breaks even by slight holding unless the dimensional accuracy is high. Moreover, even after the assembly, a plate-shaped multilayer MEA tends to break from a portion where stresses are concentrated by the difference in thermal expansion since heating and cooling are repeated during the cycle of operation and non-operation. With regard to this point, the cylindrical MEA 7 is fixed at an end and thus processing accuracy need not be high (a3). There are less portions where the stresses are concentrated and where damage is likely to occur due to the difference in thermal expansion during the heating-cooling cycle (a4). Accordingly, the cylindrical MEA has high long-term durability for repeated use and disuse. Furthermore, since the length of the cylindrical MEA 7 can be easily increased, it is easy to increase the reaction length and the performance of one cylindrical MEA can be easily expanded (a5).
According to the gas decomposing device 10 of this embodiment, ammonia is passed through the inner surface side of the cylinder and decomposed to a very low concentration. Thus, ammonia can be substantially eliminated under sealing. Advantages of (a1) to (a5) can be obtained by employing a simple cylindrical structure.

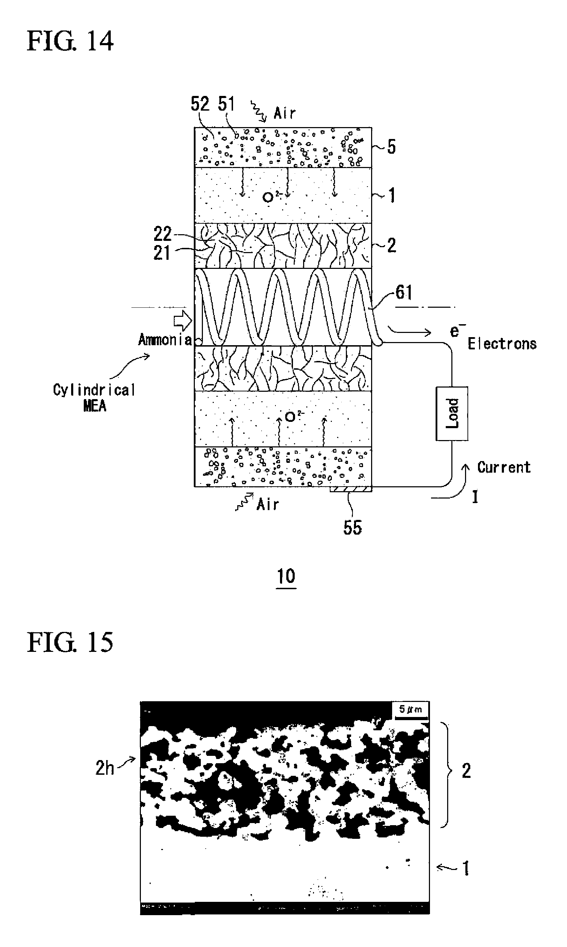

Figure 14 is a schematic diagram for describing the ammonia decomposing device 10 shown in Fig. 13 in further detail. According to the ammonia decomposing device 10, electric power is generated as a result of the anode reaction and the cathode reaction described above. As shown in Fig. 14, the power is supplied to the load in the system, e.g., a heater for heating, and contributes to reducing the cost needed for electrical power. One of the main reasons for inserting a collector 61 having a metal wire structure into the inner surface side of the cylindrical MEA 7 is that the electrical conductivity of the anode 2 is low (electrical resistance is rather large). In order to describe this, the materials constituting the cylindrical MEA 7 are described.
The anode 2 is preferably a sintered body mainly constituted by metal particle chains 21 having oxide layers formed by surface oxidation, and an oxygen ion-conducting ceramic 22. As the oxygen ion-conducting ceramic 22, scandium-stabilized zirconia (SSZ), yttrium-stabilized zirconia (YSZ), samarium-stabilized ceria (SDC), lanthanum gallate (LSGM), etc., can be used.
The cathode 5 is preferably a sintered body mainly constituted by silver (Ag) 51 and an oxygen ion-conducting ceramic 52. In this case, lanthanum strontium manganite (LSM), lanthanum strontium cobaltite (LSC), samarium strontium cobaltite (SSC), lanthanum strontium cobalt ferrite (LSCF), and the like may be used as the oxygen ion-conducting ceramic 52.
The solid electrolyte 1 may be a solid oxide, a fused carbonate, phosphoric acid, or a solid polymer having oxygen ion conductivity. A solid electrolyte already sintered and have a cylindrical shape is purchased. As the solid oxide 1, SSZ, YSZ, SDC, LSGM, or the like is preferably used.

The cathode 5 composed of the materials described above has a high electrical conductivity due to inclusion of the silver particles 51. Thus, as shown in Fig. 14, it is sufficient to provide a connecting terminal 55 at one end of the cathode 5. In contrast, the anode 2 does not contain a material having a high electrical conductivity and has a low electrical conductivity, i.e., exhibits electric resistivity. Thus, a collector is needed. Although the advantages of causing toxic substances to flow in the inner side of the cylindrical body have been described above, the technique for reliably placing a collector on the inner surface side of a cylindrical body has not been sufficiently established. Although future demand is expected, there has been no specific technique. Usually, the inner diameter of a cylindrical body is not sufficiently large. There has not been a collector that can reliably establish conduction by contacting the inner electrode (e2) while securing a space large enough to allow a gas component to flow therein and to react with the inner electrode by making contact (e1) and that can be easily industrially obtained without any complicated work (e3). The gas component flowing in the inner surface side is reducing gas and thus the effect for establishing the conduction (e2) can be more reliably achieved for a long period of time.
In this embodiment, a elastically deformable spiral metal wire, in particular, a spiral nickel wire, is used to easily achieve (e1) to (e3) above. The spiral metal wire 61 is naturally an electrically conductive wire having a unicursal shape. Since a straight cylinder MEA is used in this embodiment, the effect (e3) may appear insufficient; however, the effectiveness of the conductive structure of the present invention can be recognized when the MEA is a curved cylindrical MEA 7 having a serpentine or coil shape.

The electrochemical reaction at the anode 2 is as shown in Fig. 3 (refer to Fig. 3). The anode 2 is constituted by a sintered body of surface-oxidized metal particle chains 21 and SSZ 22, as described above. The metal of the metal particle chains 21 is preferably nickel (Ni). A small amount of iron (Fe) may be contained in addition to Ni. More preferably, a trace amount of Ti, e.g., about 2 to 10,000 ppm of titanium, is contained.
Nickel itself exhibits a catalytic action that promotes decomposition of ammonia (1). The catalytic action can be further enhanced by inclusion of trace amounts of Fe and/or Ti. Nickel oxide formed by oxidation of Ni can further enhance the accelerating action of the single metal.
In addition to the catalytic action described above, oxygen ions are involved in the decomposition reaction at the anode (2). In other words, decomposition is conducted within the electrochemical reaction. Oxygen ions contribute to the anode reaction 2NH₃ + 3O²⁻ → N₂ + 3H₂O + 6e⁻ described above by significantly improving the ammonia decomposition rate.
Free electrons e⁻ are generated as a result of the anode reaction (3). If electrons e⁻ stay in the anode 2, the progress of the anode reaction is inhibited. The metal particle chains 21 are long, resembling the shape of a string, and an interior 21a coated with an oxide layer 21b is a good conductor metal (Ni). Electrons e⁻ smoothly flow in the longitudinal direction of a string-shaped metal particle chain. Thus, the electrons e⁻ do not stay in the anode 2 but pass through the interiors 21a of the metal particle chains 21 and flow out. The migration of electrons e⁻ is significantly smooth due to the metal particle chains 21. However, since the oxide layers 21b are formed, the overall electrical conductivity is not so high and the collector 61 is needed.
Figure 15 is a cross-sectional image (secondary electron image) of the anode 2 taken by scanning electron microscopy (SEM). As shown in Fig. 15, the anode 2 has large pores 2h highly densely dispersed (refer to Fig. 3) and it is clear that the anode 2 is a porous body having a high porosity. Since the anode 2 is a porous body having a high porosity, surface portions where the anode reaction occurs are present at high density.
In sum, the anode of this embodiment have the following effects (1), (2), and (3).
(1) Acceleration of decomposition reaction by the nickel oxide layers of the nickel particle chains (high catalytic function)
(2) Acceleration of decomposition by oxygen ions (accelerated decomposition within electrochemical reaction)
(3) Retention of electronic conductivity by a string-shaped good conductor of metal particle chains (however the electron conductivity is not improved enough to eliminate the need for a collector)
The anode reaction is greatly accelerated by the features (1), (2), and (3) above.
Decomposition of the gas to be decomposed proceeds by merely increasing the temperature and bringing the gas to be decomposed in contact with a catalyst. However, as described above, in an element that constitutes a fuel cell, i.e., an electrochemical reactor, the decomposition reaction rate dramatically improves due to (1), (2), and (3) above when oxygen ions supplied from the cathode 5 through the ion-conducting solid electrolyte 1 are involved in the reaction and electrons resulting from the reaction are conducted to the outside.

The electrochemical reaction at the cathode 5 is as shown in Fig. 4 (refer to Fig. 4). The cathode 5 of this embodiment is constituted by Ag particles 51 and LSM 52, as described above. Of these, Ag 51 has a catalytic function that can greatly accelerate the cathode reaction O₂ + 2e⁻ → 2O²⁻. As a result, the cathode reaction can proceed at a significantly high rate.

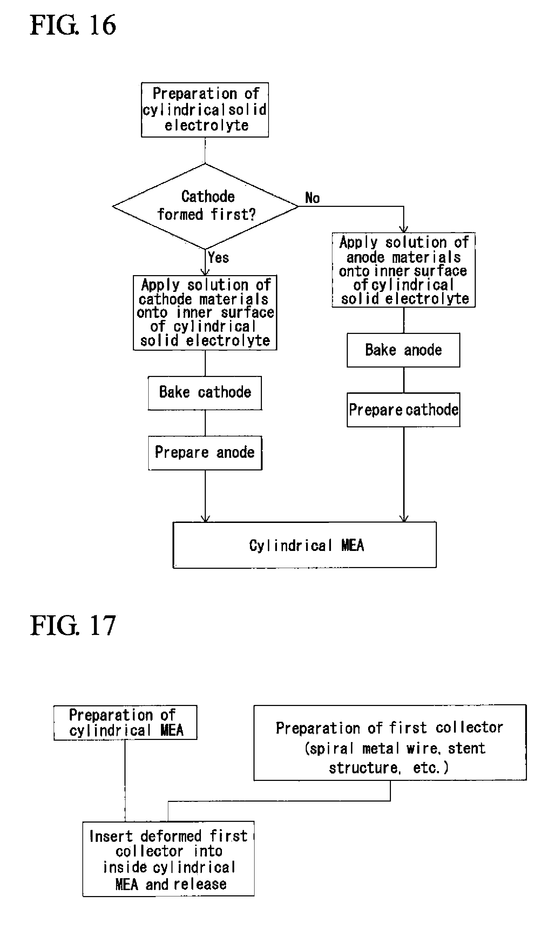

Next, the outline of the method for manufacturing the cylindrical MEA 7 is described with reference to Fig. 16. Figure 16 shows a process of baking the anode 2 and the cathode 5 separately. First, a commercially available cylindrical solid electrolyte I is prepared by purchase. Next, in the case where the cathode 5 is to be formed, a solution of cathode constituent materials dissolved in a solvent to yield particular flowability is prepared, and the solution is uniformly applied to the inner surface of the cylindrical solid electrolyte. Then baking is conducted under conditions suitable for the cathode 5. Then the anode 2 is formed. There are many variations in addition to the manufacturing method shown in Fig. 16. When baking is to be conducted only once, the components are not separately baked as in the method shown in Fig. 16; instead, all components are formed in a green state by application and baked at the last stage under conditions common to all the components. There are many other variations and the manufacturing conditions can be determined by comprehensively considering the materials constituting the individual components, target decomposition efficiency, manufacturing cost, etc.

Specific examples of the materials and baking conditions of the individual components in the method for manufacturing the cylindrical MEA described above are as follows.

### 1. Anode

### (1) Metal particle chains 21

Metal particle chains 21 are preferably prepared by a reduction precipitation method. The reduction precipitation method for preparing the metal particle chains 21 is described in detail in Japanese Unexamined Patent Application Publication No. 2004-332047 etc. The reduction precipitation method introduced in this document is a method that uses trivalent titanium (Ti) ions as a reductant and trace amounts of Ti is contained in the precipitated metal particles (Ni particles etc.). Accordingly, the particles can be determined as being prepared by a reduction precipitation method that involves trivalent titanium ions when the particles are analyzed to determine the Ti content. Particles of a desired metal can be obtained by changing the metal ion that is present with the trivalent titanium ions. In case of Ni, Ni ions are used. When trace amounts of Fe ions are added, Ni particle chains containing trace amounts of Fe can be formed.
In order to form a chain, the metal must be a ferromagnetic metal and have a particular size or larger. Since Ni and Fe are ferromagnetic metals, metal particle chains can be easily formed. The size requirement is needed during the process of forming an integral metal body, in which magnetic domains are generated in a ferromagnetic metal and become magnetically coupled to each other and a metal is precipitated by keeping the coupled state, resulting in growth of metal layers. After metal particles of a particular size or larger are magnetically coupled to each other, precipitation of the metal continues. For example, the necked portions at the borders between the coupled metal particles grow thicker along with other portions of the metal particles. The average diameter D of the metal particle chains 21 contained in the anode 2 is preferably in the range of 5 nm to 500 nm. The average length L is preferably in the range of 0.5 µm to 1000 µm. The ratio of the average length L to the average diameter D is preferably 3 or more. Alternatively, the metal particle chains may have dimensions outside these ranges.

### (2) Surface oxidation

Preferable techniques for surface oxidation of the metal particle chains or metal particles are (i) thermal oxidation by a vapor phase method, (ii) electrolytic oxidation, and (iii) chemical oxidation. If (i) is employed, treatment is preferably conducted in air at 500 to 700°C for 1 to 30 minutes. This is the simplest technique and the oxide film thickness is difficult to control. If (ii) is employed, surface oxidation is conducted by anodization by applying a potential of about 3 V on a standard hydrogen electrode basis, but the oxide film thickness can be controlled by adjusting the amount of electric power depending on the surface area. However, when the area to be treated is large, it is difficult to uniformly form an oxide film. If (iii) is employed, surfaces are oxidized by being immersed in a solution dissolving an oxidant such as nitric acid for about 1 to 5 minutes. The oxide film thickness can be controlled by the length of time, temperature, and type of oxidant; however, washing off of the chemicals requires work. Although any of these techniques is preferred, (i) or (iii) is more preferable.
The thickness of the oxide layer is preferably 1 nm to 100 nm and more preferably 10 nm to 50 nm. The thickness may be outside this range. When the oxidized film is too thin, the catalytic function becomes insufficient. Moreover, the film may be easily metalized even in a slightly reductive atmosphere. If the oxide film is too thick, although sufficient catalytic properties are retained, the electronic conductivity at the interface is degraded and the power generation performance is lowered.

### (3) Baking conditions

The average diameter of the SSZ raw material powder is about 0.5 µm to 5 µm. The blend ratio of the surface-oxidized metal particle chains 21 and SSZ 22 is in the range of 0.1 to 10 in terms of molar ratio. Sintering is conducted for 30 to 180 minutes in, for example, an air atmosphere by retaining a temperature in the range of 1200°C to 1600°C.

### 2. Cathode

### (I) Silver

The average diameter of Ag particles is preferably 10 nm to 100 nm.

### (2) Baking conditions

The average diameter of the ion conductive ceramic such as LSM or LSCF is preferably about 0.5 µm to 50 µm. The blend ratio of silver to the ion conductive ceramic such as LSM or LSCF is preferably about 0.01 to 10. Regarding the baking conditions, a temperature of 1000°C to 1600°C is retained for 30 to 180 minutes in an air atmosphere.

The collector 61 constituted by a coil-shaped metal wire shown in Figs. 13 and 14 can be manufactured by an existing method. A copper wire, a copper alloy wire, an aluminum wire, an aluminum alloy wire, and other types of metal or ally wires may be used as the metal wire. The wire diameter may be adequately selected in the range of about 0.1 mm to about 5 mm according to the purpose. The pitch in the axial direction of the spiral (spiral pitch) is preferably at least 0.5 times the wire diameter in a stress-free state since there is need to secure the portion where the anode 2 is exposed to conduct the anode reaction.

As shown in Fig. 17, the conductive wire structure described above, i.e., a coil-shaped metal wire 61, is prepared and inserted into a cylindrical MEA 7 purchased or manufactured through the process shown in Fig. 16 by elastically deforming the coil-shaped metal wire 61, followed by release of the elastic deformation (release). In order to install the coil-shaped metal wire 61, a wire or a rod-shaped member that functions as a guide may be attached to the tip of the coil-shaped metal wire, and the coil-shaped metal wire may be inserted into cylinder by being guided by the guide such as a wire. The spiral diameter of the coil-shaped metal wire 61 is adjusted to be larger than the inner diameter of the cylindrical MEA 7 in a stress-free state. During installation, the spiral metal wire is stretched in the axial direction to enlarge the gaps of the spiral pitches so that the spiral diameter is reduced and the wire is inserted into the inner surface side of the cylindrical MEA 7. The anode surface on which the anode reaction occurs can be sufficiently exposed to ammonia due to the enlarged gaps of the spiral pitches that are created during the installation.
The preliminary condition of the manufacturing method shown in Fig. 17 is that the conductive wire is set to come into contact in a line manner with the inner surface of the cylindrical body at least at the operation temperature during the step of forming the cylindrical MEA and the step of preparing the first collector.
When the spiral metal wire 61 is urged against the inner surface of the MEA 7 as described above at normal temperature, the difference in the thermal expansion coefficient between the two is not so large, and thus the contact (conduction) is retained at the operation temperature. If the difference in thermal expansion coefficient is large and the urging force is large, buckling may occur in the course of increasing the temperature to the operation temperature, and sufficient urging force may not be obtained. Accordingly, in order to establish contact (conduction) at the operation temperature, in some cases it is preferable that the urging (contact) do not occur at normal temperature.

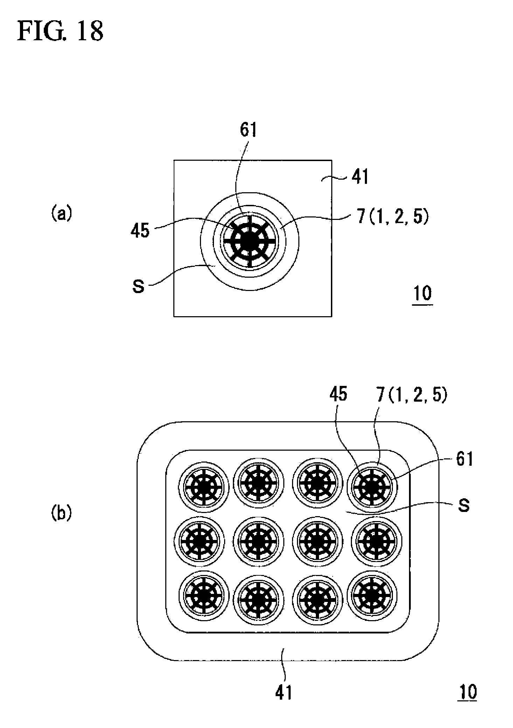

Figure 18(a) is a gas abatement device that uses one cylindrical MEA 7, and Fig. 18(b) is a gas abatement device that uses a plurality (twelve) of cylindrical MEAs 7 shown in Fig. 18(a) aligned parallel to each other. When the throughput capacity is not enough with one MEA 7, a plurality of MEAs aligned parallel to each other may be provided to increase the capacity without a complicated process. A collector which has a metal wire structure is installed onto the inner surface side of each of the cylindrical MEAs 7 and ammonia-containing gas is fed to the inner side. A space S is formed on the outer surface side of the cylindrical MEA 7 so that the outer surface contacts high-temperature air or high-temperature oxygen. Although ammonia-containing gas is supplied on the inner surface side of the cylindrical MEA 7, it is difficult to reduce the ammonia concentration to a very low level if the gas just passes therethrough. Accordingly, an inner-surface guiding member 45 including baffle portions (blocking portions) density of which is radially decreased from the center of the inner cylinder cross-section toward the inner surface of the MEA 7 may be installed by considering the insertion loss and the ammonia outlet concentration. The inner-surface guiding member 45 may be an umbrella-shaped member the tip of which is directed toward the inlet into which the ammonia-containing gas is introduced or an umbrella-shaped member having pores density of which is increased from the center toward the periphery.
A heater 41, i.e., a heating device, may be provided by holding together the plurality of cylindrical MEAs 7 aligned in parallel. Because the MEAs are held together, size reduction can be achieved.

### (Sixth Embodiment)

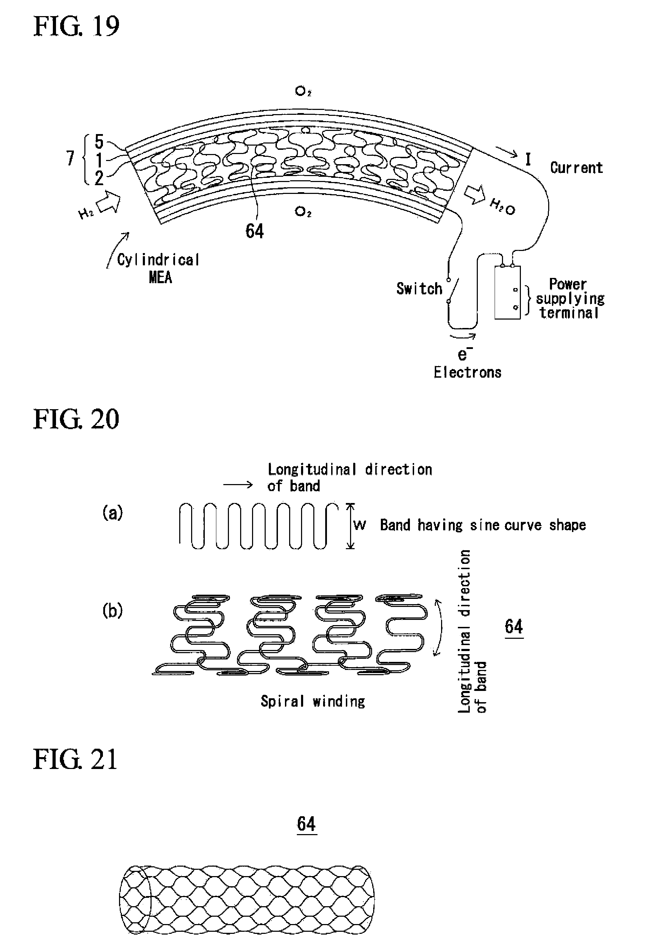

Figure 19 is a diagram showing a fuel cell 10, which is an electrochemical reactor of a second embodiment of the present invention. According to the fuel cell 10, an anode (first electrode) 2 covers the inner surface of a cylindrical solid electrolyte 1, and a cathode (second electrode) 5 covers the outer surface to form a cylindrical MEA 7 (1, 2, 5). In general, the cylindrical body may be twisted into, for example, a spiral shape or a serpentine shape, and the MEA 7 shown in Fig. 19 has a slightly curved cylindrical shape. The electrochemical reactor 10 of this embodiment is characterized in that a stent structure 64 constituted by a metal wire or a conductive wire is installed onto the inner surface of the cylindrical MEA 7 to function as a collector for the inner surface electrode. The stent structure 64 supports the cylindrical MEA 7 from the inner surface side at the operation temperature.
The word "stent" originally refers to an inner-side supporting structure of a tube, the inner-side supporting structure being formed of metal wires or the like and used to keep open a lumen by being placed in a hollow viscus such as a blood vessel, a trachea, or a esophagus. The stent structure of the present invention is similar to the inner-side supporting structure of a medical tube and refers to a structure that abuts and supports the inner surface of the cylindrical MEA in a line manner or in an overlapping line manner. The "stent" includes those stents that have line constructions the same as or similar to those of medical stents. The line construction may be those which are not found in the medical fields as long as the structure has the above-described features. The stent structure is preferably elastically deformable for installation during manufacturing. Since the stent structure is used at high temperature, the stiffness or the like at normal temperature is preferably at a particular level or higher (structure that does not easily soften at high temperature). Regarding the support from the inner surface side at the operation temperature, the stress value range is not particularly limited and the support is considered to be established as long as the stent structure abuts the inner surface of the cylindrical body at the operation temperature. In other words, as long as the structure abuts the inner surface, the first collector of the present invention can achieve the purpose of collecting electric power. It should be noted that a stent structure can be clearly identified as the stent structure when the structure used in the medical fields is employed, and any other structures are frequently identified as collectors having the structures described above. This poses no problem.

The stent structure 64 shown in Fig. 19 will now be described by referring to Fig. 20. In Fig. 20(a), a metal wire is processed into a serpentine shape or a sine curve shape to form a band-shaped member having a width W. Figure 20(b) is a diagram showing a stent structure 64 obtained by processing the band-shaped member to have a spiral shape. The stent structure shown in Fig. 19 has the same structure as that shown in Fig. 20(b).
The outer diameter of the stent structure 64 in a stress-free state is set to be slightly larger than the inner diameter of the MEA 7 and the stent structure 64 is elastically deformed during installation onto the inner surface side of the MEA 7. When installed, the stent structure is slightly extended in the longitudinal direction so that the outer diameter is decreased to match the inner diameter of the MEA 7. In such a state, the stent structure 64 is urged against the inner surface-side electrode (anode) 2 of the MEA 7 by elastic force at normal temperature as it tries to expands.
The elastic force is zero or substantially zero at high temperature at which the fuel cell 10 operates. However, the conduction state between the inner surface electrode 2 and the stent structure 64 can be maintained under the conditions that (1) the linear expansion coefficient is larger than that of MEA 7 (usually, linear expansion coefficient of a metal is larger than that of a ceramic such as glass by several ten percent) and (2) a particular strength or a higher strength is exhibited even at high temperature.

The fuel cell 10 shown in Fig. 19 realizes reaction R4 of Table I. The anode reaction is H₃ + O²⁻ → H₂O + 2e' and the cathode reaction is O₂ + 4e⁻ → 2O²⁻. Hydrogen serving as a fuel is introduced into the fuel electrode (anode 2) and oxygen is introduced into the air electrode (cathode 5). As a result of reaction R4, electrical power is generated and the generated power is stored in a battery or used in synchronization with the operation without storing so as to meet the electric demand.

When hydrogen serving as a fuel is fed on the inner surface side of the cylindrical MEA 7, a device having a stable strength can be obtained as discussed in connection with the ammonia decomposing device above. That is, although the material of the cylindrical MEA 7 is itself fragile, the strength can be increased by taking a cylindrical shape (a1). Such a MEA has a stable strength compared to plate-shaped multilayer MEA in which multiple thin sheets of MEA are stacked. Thus damage that would occur by application of small force can be avoided during handling in assembling a fuel cell 10 and the production yield can be improved (a2). A plate-shaped multilayer MEA easily breaks even by slight holding unless the dimensional accuracy is high. Moreover, even after the assembly, the plate-shaped multilayer MEA tends to break due to cracks in the stress-concentrated portions since heating and cooling are repeated in the operation and non-operation cycle. With regard to this point, the cylindrical MEA 7 is fixed at an end and thus the processing accuracy need not be high (a3). There are less stress-concentrated portions that tend to crack due to the heating and cooling cycle. Accordingly, the cylindrical MEA has high long-term durability for repeated use and disuse. Furthermore, since the length of the cylindrical MEA 7 can be easily increased, it is easy to increase the reaction length and the performance of one cylindrical MEA can be easily expanded (a5).

In this embodiment, the stent structure 64 is used to easily achieve (e1) to (e3) above. In other words, while the inner diameter of the cylindrical body is not usually sufficiently large, a collector that can reliably establish conduction by contacting the inner electrode (e2) while securing a space large enough to allow a gas component to flow therein and to react with the inner electrode by making contact (e1) can be easily industrially obtained without any complicated work (e3).

A plurality of fuel cells 10 of the sixth embodiment may also be arranged as shown in Fig. 18(b) and heated together by a heater 41 or a guiding member 45 may be disposed on the inner surface side. The fuel cells may be connected in series in a multistage configuration and hydrogen may be supplied from the upper stage to lower stages.

Figure 21 is a diagram showing a modification of a stent structure shown in Figs. 19 and 20. The stent structure is formed by weaving metal wires. Although the outer surface of a cylinder formed of conductive wires appears to have irregularities, the outer surface securely fits the inner surface of an actual cylindrical MEA 7. A stent structure 64 which is a modification shown in Fig. 21 also achieves effects and advantages (e1) to (e3) as with the stent structure shown in Figs. 19 and 20.
Although only two examples of the stent structures are described here, many other variations may be employed.

Embodiments of the electrochemical reactor of the present invention may be any device as long as electrochemical reaction is proceeded. Embodiments may be a power generator such as a fuel cell that generates electric power or an electrolyzer that conducts electrolysis by injection of electric power. Embodiments may be an abatement device (power generation and power injection) mainly directed to decomposing toxic gas or may be a battery directed to generate and supply electric power. Few of the examples of using the electrochemical reactor of the present invention are presented in Table I described above; however, the reactor can be used in devices in the field in which significant technical progress has been made recently, a.k.a., fuel cells.

### EXAMPLES

Next, examples of actual studies made by using specimens are described. A total of thirteen specimens, namely, Examples A1 to A7 and Comparative Examples B1 to B6, were used. The specimens are presented in Table II.

### (Examples A1 to A7)

A sintered body composed of SSZ (YSZ in one example) (c₁), and metal particle chains (c₂) which are nickel chains (average chain thickness: 10 nm to 150 nm, average chain length: 1 µm to 30 µm) or nickel chain containing 20 wt% iron (average chain thickness: 150 nm, average chain length: 30 µm) was used as the anode. Oxidation was conducted so that the thickness of the oxide layer of the nickel chains was 1 nm to 5 nm. The oxide layer was formed by (i) thermal oxidation by a vapor phase method described in the section 1. Anode, (2) Surface Oxidation, in air at 650°C for 20 minutes. The thickness range of the oxide layer, i.e., 1 nm to 5 nm, is a relatively thin range with respect to the preferable thickness range described in section (2) above. Thus, the aforementioned advantageous effects can be reliably achieved while shortening the processing time. A sintered body composed of LSM (c₃) and spherical silver (average diameter: 50 nm to 2 µm) was used as the cathode. The temperature was set to one level, i.e., 800°C, which was relatively low.

### (Comparative Examples B1 to B6)

A sintered body composed of SSZ (YSZ in one example) (d₁), and spherical nickel (d₂) (average diameter: 1 µm to 2 µm) was used as the anode. A sintered body composed of LSM (d₃) and either spherical silver (average diameter: 1 µm to 2 µm) or no catalyst (d₄) was used as the cathode. The temperature was set to three levels: 800°C, 900°C, and 1000°C.
The feature common to Examples A 1 to A7 is the constitutional element (c₂) which is a catalyst for the anode. The combination of the constitutional element (c₂) and the constitutional element (c₄), which is the catalyst for the cathode, is also common. In strengthening the effect achieved by (c₂) and the combination (c₂) + (c₄), the electrolyte SSZ or YSZ of the anode and the electrolyte LSM of the cathode are bringing favorable effects.

### (Evaluation)

The throughput capacity per 1 cm² was measured in a particular cell containing ammonia. As for the measurement method, the amount of ammonia discharged from the cell was measured by a detector tube method. The results are shown in Table II.

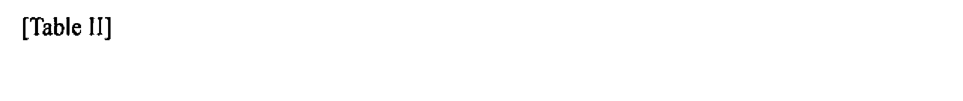

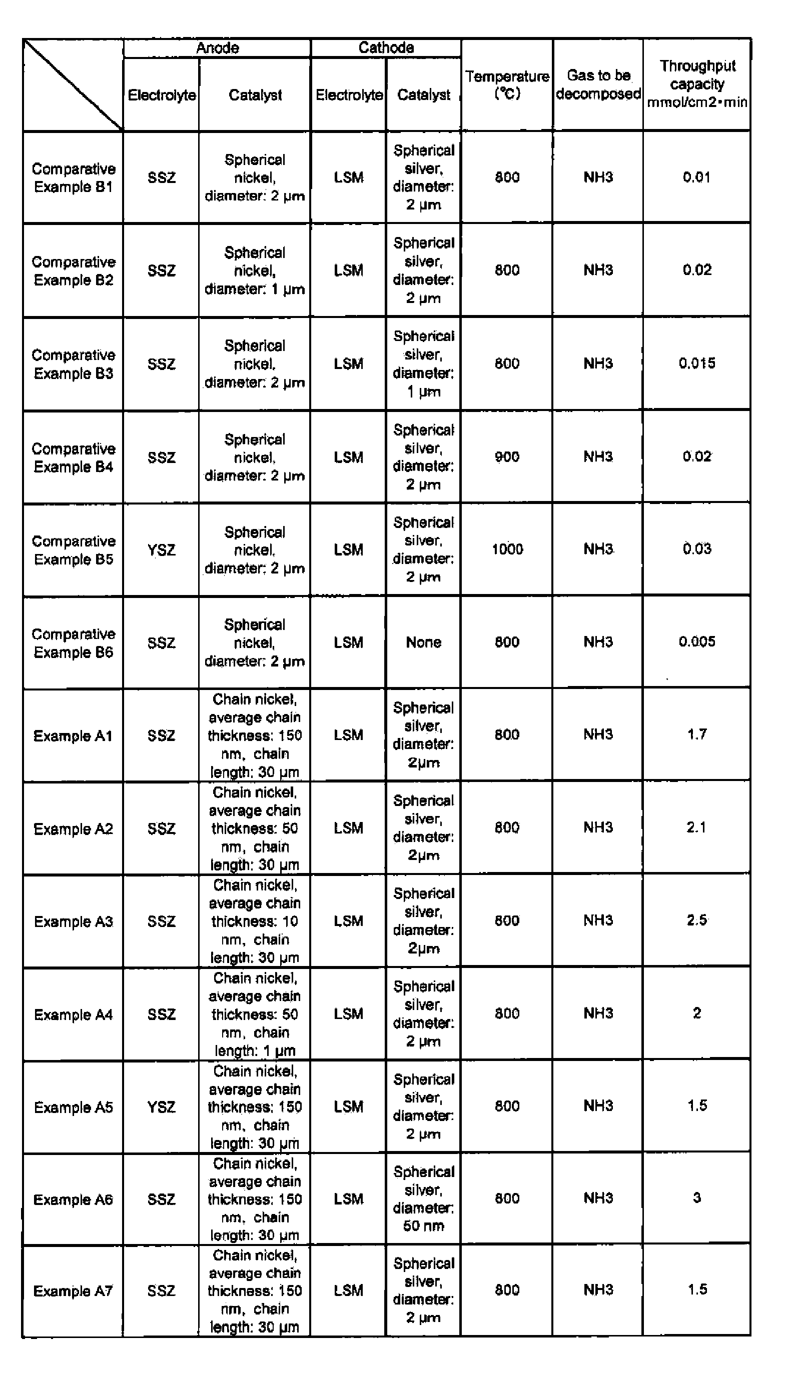

Table II shows the following.
(1) When nickel chains (abbreviated expression ofNi particle chains) are used as the catalyst for the anode, the ammonia decomposition performance can be enhanced about 100 times compared to the case of using spherical nickel.
(2) Ammonia decomposition performance is higher when the average chain thickness of the nickel chains of the catalyst for the anode is smaller. For example, Example A3 (average chain thickness: 10 nm) has ammonia processing performance about 20% higher than that of Example A2 (average chain thickness: 50 nm) and nearly 50% higher than that of Example A I (average chain thickness: 150 nm).
   In contrast, the influence of the average chain length is not clearly identified.
(3) The amount of ammonia decomposed can be significantly increased by making silver particles of the catalyst for the cathode finer, i.e., from 2 µm to 0.05 µm (50 nm). For example, comparison of Examples A6 and A7 shows that the ammonia decomposition amount is increased by about two fold.
(4) Nickel chains containing iron have ammonia decomposition performance comparable to that of nickel chains not containing iron. In other words, inclusion of iron does not have a significant effect.
(5) Regarding the temperature, Comparative Examples show the increase in ammonia decomposition performance by increasing the temperature. As far as the present invention is concerned, the effect of temperature is considered universal and irrelevant to the effects unique to a substance; hence, it is assumed that the decomposition performance of Examples will be enhanced by increasing the temperature.
In sum, (1) to (3) above clearly show that the gas decomposing element of the present invention has excellent ammonia decomposition performance. The effect of the temperature referred to in (5) can also be achieved. Moreover, paragraph (4) describes a mere example, and other examples showing that the ammonia decomposition action is enhanced by elements other than iron have also been reported. As long as metal particle chains having oxidized surfaces are used, the gas decomposing element is in the scope of the present invention irrespective of whether favorable effects can be obtained by alloying.

Although the embodiments of the present invention have been described above, they are merely examples and do not limit the scope of the present invention. The scope of the present invention is presented by the description of Claims and shall be construed to include all modifications and alterations within the range and the meaning of Claims and equivalents thereof.

### Industrial Applicability

According to an electrochemical reactor of the present invention, a large quantity of gas can be efficiently decomposed with a small and simple element. The maintenance cost is low and by-product gas that adversely affects the environment is not generated. An electrochemical reactor that is easy to handle during assembling and has a simple structure and high durability can be obtained. In particular, when a cylindrical MEA that is easy to handle during assembling is used, a collector for the inner surface electrode can be very easily formed according to the present invention although placement of a collector for an inner surface electrode is frequently difficult. When the reactor can also be used as a power generator, electric power may be supplied to a heating device for keeping the electrochemical reactor at a high temperature.

### Reference Signs List

- 1: ion conductive electrolyte (solid oxide electrolyte)
- 2: anode
- 5: cathode
- 10: gas decomposing device
- 11: anode collector
- 12: cathode collector
- 21, 56: metal particle chain,
- 21a, 56a: core (metal portion) of metal particle chain
- 21 b, 56b: oxide layer
- 22, 27: ion conductive ceramic for anode
- 41: heater
- 45: guiding member
- 26, 51: silver
- 52, 57: ion conductive ceramic for cathode
- 55: outer surface electrode (cathode) terminal portion
- 61: coil-shaped metal wire (collector having a conductive wire structure)
- 64: stent structure (collector having a conductive wire structure)
- S: air space

## Claims

1. An electrochemical reactor for decomposing gas, comprising:
a porous anode;
a porous cathode that is paired with the anode; and
an ion conductive material having ion conductivity and being interposed between the anode and the cathode,
wherein the anode and/or the cathode includes surface-oxidized metal particle chains.

2. The electrochemical reactor according to Claim 1, wherein the anode and/or the cathode is a sintered body containing metal particle chains mainly composed of nickel (Ni) and an ion conductive ceramic.

3. The electrochemical reactor according to Claim 1 or 2, wherein the cathode and/or the anode contains silver (Ag).

4. The electrochemical reactor according to any one of Claims 1 to 3, wherein the anode, the ion conductive material, and the cathode form a flat plate.

5. The electrochemical reactor according to any one of Claims 1 to 3, wherein the anode, the ion conductive material, and the cathode form a cylinder.

6. The electrochemical reactor according to Claim 5, wherein the anode is disposed on an inner surface side of the cylinder and the cathode is disposed on an outer surface side of the cylinder.

7. The electrochemical reactor according to any one of Claims 1 to 6, further comprising a collector formed of a porous metal body, the collector being disposed on a side of the anode and/or the cathode opposite the ion conductive material.

8. The electrochemical reactor according to Claim 7, wherein the porous metal body is a metal-plated body.

9. The electrochemical reactor according to any one of Claims 1 to 8, wherein a first fluid is introduced into the anode, a second fluid is introduced into the cathode, the ion conductive material has oxygen ion conductivity, and electric power can be extracted from the cathode and the anode.

10. The electrochemical reactor according to Claim 9, further comprising a heater to which the electric power is supplied.

11. The electrochemical reactor according to any one of Claims 1 to 8, wherein a third fluid is introduced into the anode, a fourth fluid is introduced into the cathode, the ion conductive material has oxygen ion conductivity, and electric power is injected from the cathode and the anode.

12. An ammonia decomposing element comprising the electrochemical reactor according to any one of Claims 1 to 11, wherein an ammonia-containing fluid is introduced into the anode and a fluid containing oxygen atoms is introduced into the cathode.

13. A power generator comprising the electrochemical reactor according to Claim 9 or 10 and an electric power supplying unit for supplying the electric power to another electric device.

14. A gas decomposing element comprising an electrochemical reactor for a fluid, wherein the electrochemical reactor according to any one of Claims 1 to 12 is used.

15. The electrochemical reactor according to any one of Claims 1 to 3 and 5 to 11, comprising a cylindrical membrane electrode assembly (MEA) that includes a first electrode which is one of the anode and the cathode, a second electrode which is the other one of the anode and the cathode, and an oxide solid electrolyte sandwiched between the first electrode on an inner surface side and the second electrode on an outer surface side; a heating device for heating the MEA to an operation temperature higher than normal temperature; and a first collector being inserted into an inner surface side of the cylindrical MEA and being in contact with the first electrode, wherein the first collector is formed of a conductive wire that extends along an inner surface of the cylindrical body and makes contact in a line manner with the inner surface of the cylindrical body at least at the operation temperature.

16. The electrochemical device according to Claim 15, wherein the first collector contacts the inner surface of the cylindrical body by thermal expansion of the conductive wire at the operation temperature without using a conductive connecting material.

17. The electrochemical device according to Claim 15 or 16, wherein the first collector is elastically stretched in a longitudinal direction at normal temperature so that an outer diameter thereof is decreased.

18. The electrochemical reactor according to any one of Claims 15 to 17, wherein the first collector is formed of one processed conductive wire (three-dimensional unicursal line) that extends on the inner surface side of the cylindrical MEA.

19. The electrochemical reactor according to any one of Claims 15 to 17, wherein the first collector is integrally formed by subjecting a plurality of the conductive wires to at least one of bonding, weaving, and other processing.

20. The electrochemical reactor according to any one of Claims 15 to 19, wherein the first collector is a stent structure that supports the cylindrical MEA from the inner surface side at the operation temperature.

21. The electrochemical reactor according to any one of Claims 15 to 20, wherein, in the MEA, the first electrode is the anode and the second electrode is the cathode.

22. The electrochemical reactor according to any one of Claims 15 to 21, wherein the reactor is used for abatement of ammonia-containing gas, ammonia is allowed to flow inside the cylindrical MEA, and an outer side of the MEA is in contact with air.

23. The electrochemical reactor according to any one of Claims 15 to 22, wherein the second electrode includes silver particles and an ion conductive ceramic and functions as a collector, and the electrochemical reactor does not include a separate collector for the second electrode.

24. The electrochemical reactor according to any one of Claims 15 to 23, wherein the shape of the cylindrical MEA is straight, curved, meandrous, or spiral.

25. A method for manufacturing an electrochemical reactor that operates at an operation temperature higher than normal temperature, the method comprising:
a step of forming a cylindrical MEA that includes a first electrode on an inner surface side, a second electrode on an outer surface side, and a solid electrolyte sandwiched between the first electrode and the second electrode;
a step of preparing a first collector for the first electrode of the MEA, the first collector being formed of a conductive wire; and
a step of installing the first collector onto the inner surface side of the MEA,
wherein, in the step of forming the cylindrical MEA and the step of preparing the first collector, the conductive wire is set to make contact in a line manner with an inner surface of the cylindrical body at least at the operation temperature.

26. The method for manufacturing an electrochemical reactor according to Claim 25, wherein, in the step of installing the first collector, the first collector is elastically stretched in a longitudinal direction thereof to decrease an outer diameter thereof, inserted into the cylindrical MEA, and released at a particular position.

27. The method for manufacturing an electrochemical reactor according to Claim 25 or 12, wherein, in the step of installing the first collector, the first collector is a self-expanding stent structure and is inserted into the cylindrical MEA by decreasing a diameter thereof to be smaller than that of the cylindrical MEA and released at a particular position so that the stent structure elastically expands itself and stays at that position.
